# EUROPEAN PATENT SPECIFICATION

(11) **EP 1 102 188 B1**
(45) Date of publication and mention of the grant of the patent: **27.12.2006**
(21) Application number: 00310349.6
(22) Date of filing: 22.11.2000
(51) Int. Cl.: G06Q 30/00

(54) **Electronic catalog uitilization system for enabling creation/recovery of partial set of electronic catalog and free devision of electronic catalog**
System zur Verwendung eines elektronischen Katalogs für die Erstellung und Wiederherstellung eines Teilsatzes des elektronischen Katalogs und für die freie Unterteilung des elektronischen Katalogs
Système d'utilisation d'un catalogue électronique pour la création et la récupération d'un sous-ensemble du catalogue électronique et pour le partage libre du catalogue électronique

(30) Priority: 22.11.1999 JP 33202699
(43) Date of publication of application: 23.05.2001
(73) Proprietor: KABUSHIKI KAISHA TOSHIBA, Kawasaki-shi, Kanagawa-ken 210-8572 (JP)
(72) Inventor: Ito, Satoshi, c/o Intellectual Property Div., Tokyo (JP); Minamino, Noriko, c/o Intellectual Property Div., Tokyo (JP)
(74) Representative: Midgley, Jonathan Lee

(56) References cited:
- US-A- 5 319 542
- US-A- 5 848 421
- G. PIERRA ET AL: "Exchange of component data: The PLIB (ISO 13584) model, standard and tools." PROCEEDINGS OF THE CALS EUROPE'98 CONFERENCE, [Online] 16 - 18 September 1998, pages 160-176, XP002213455 Paris, France. Retrieved from the Internet: <URL:http://www.plib.ensma.fr/plib/upload/ CALSEUROPE_master.pdf> [retrieved on 2002-09-10]
- LIANG J ET AL: "Synthesis of consolidated data schema for engineering analysis from multiple STEP application protocols" COMPUTER AIDED DESIGN, ELSEVIER PUBLISHERS BV., BARKING, GB, vol. 31, no. 7, June 1999 (1999-06), pages 429-447, XP004172466 ISSN: 0010-4485
- NIKOLAUS ONDRACEK: "Electronic Catalogues Management and Usage" PROC. OF THE INTERNAT. SYMP. ON GLOBAL ENGINEERING NETWORKING GEN'97, 23 - 24 April 1997, XP002213457 Antwerp, Belgium
- ANONYMOUS: "DATAKIT products" INTERNET, [Online] 18 April 1999 (1999-04-18), XP002213456 Retrieved from the Internet: <URL:http://web.archive.org/web/1999041809 5307/http://www.datakit.com/Eng/product2.h tm#STEP%20tool%20kit> [retrieved on 2002-09-11]
- ARNOLD J A ET AL: "An approach for the interoperation of web-distributed applications with a design model" AUTOMATION IN CONSTRUCTION, ELSEVIER SCIENCE PUBLISHERS, AMSTERDAM, NL, vol. 8, no. 3, February 1999 (1999-02), pages 291-303, XP004161221 ISSN: 0926-5805
- ORT A.; BUGOW R.: 'Die Schaffung eines offenen Teilebibliothekskonzeptes' IMW INSTITUTSMITTEILUNG NR. 19, [Online] 1994, pages 73 - 78 Retrieved from the Internet: <URL:http://www.imw.tu-clausthal.de/inhalte /forschung/publikationen/mitteilungen/19/pd f/19_11.pdf> [retrieved on 2004-12-06]

## Description

### BACKGROUND OF THE INVENTION

### FIELD OF THE INVENTION

The present invention relates to an electronic catalog utilization system for utilizing an electronic catalog formed according to a prescribed standard such as ISO13584.

### DESCRIPTION OF THE BACKGROUND ART

In recent years, an electronic catalog system for electronically providing product Information on the Internet has been developed and utilized in the consumer oriented electronic commerce (B2C-EC: Business to Consumer Electronic Commerce). In the B2C-EC. a transaction between the user side (buyer) and the Information provider side (seller) is associated with a rather simple process of: "information acquisition/order" by the buyer → "merchandise shipment" by the seller → "charge payment" by the buyer, for example, and the product information can be expressed in a simple data structure because that information itself will not be reused usually. For this reason, the functions required for the electronic catalog are also relatively simple, so that there are many WWW based systems implemented In a file format such as that of HTML, SGML, XML, etc.

On the other hand, the electronic commerce between enterprises (B2B-EC: Business to Business Electronic Commerce) is associated with a very complicated process such as: "information acquisition" by the buyer → "specification inquiry" by the buyer → "parts evaluation" by the buyer → "specification change" by both sides → "sample exchange" by both sides → "trial manufacture" by the seller, "price and delivery condition negotiation" by both sides → "acceptance decision and order" by the buyer → "manufacture and shipment" by the seller → "delivery and charge payment" from each side, as in the case of parts supply, for example. In addition, the parts information is frequently reused at the product design stage as in the case of specification change or trial manufacture, so that there is a need to provide a unified data structure that can be shared by the user side and the information provider side for the parts information expression.

In this regard, the electronic catalog data standard that is currently proposed as the international standard by the ISO called ISO13584 is aimed at realization of sharing and reuse of parts data among enterprises by using a unified data structure, such that the construction of databases for parts is currently in progress in Europe.

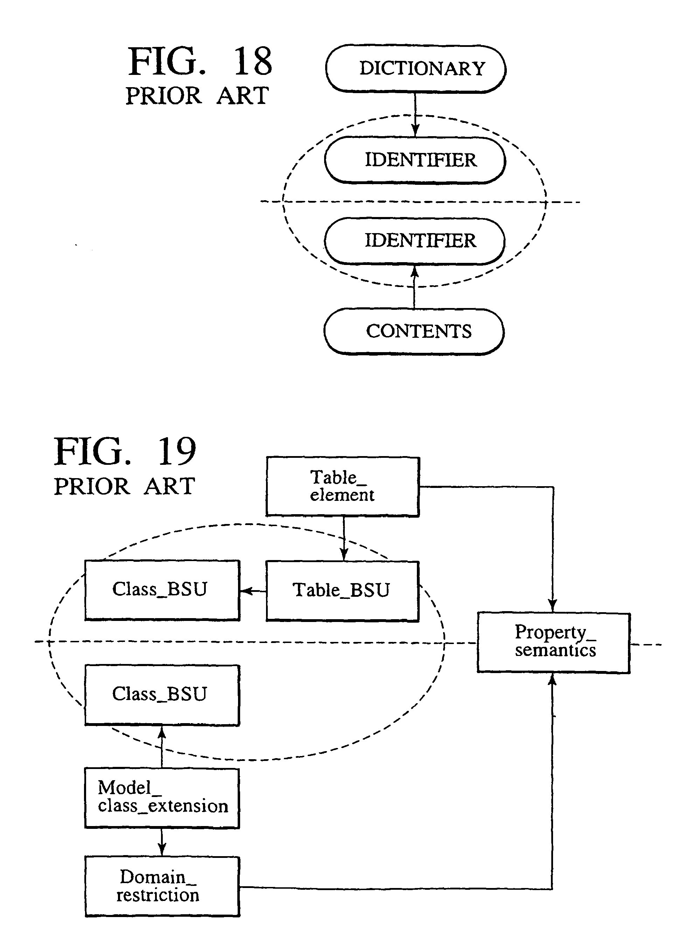

As shown in Fig. 18, this ISO13584 standard is formed by three levels including a Basic Semantic Unit that represents an identifier, a dictionary Information, and contents (catalog data), where the dictionary and contents are connected through the Basic Semantic Unit that is an identifier.

In the ISO13584 standard, the catalog data are to be described in files using the ISO10303-21 format, and in this IS010303-21, the file division and the handling of plural files are undefined as out of the standard, so that the file division using the above described Basic Semantic Unit is presumed.

Consequently, in the existing systems, the file division is realized by using the above described Identifier. More specifically, in the existing systems, the division of the electronic catalog is realized by a system comprising:
(1) means for extracting only identifiers and the dictionary;
(2) means for extracting identifiers not containing the dictionary information of a super-class from a selected class up to a root class and a partial tree belonging to a selected class, and the catalog data belonging to that partial tree, by selecting a class used in indicating a classification structure of the dictionary by a tree structure; and
(3) means combining the above described two means.

In the case of considering the effective utilization of electronic catalog system for B2B-EC as described above, it is necessary to reduce a size of data from a viewpoint of distribution, sharing and reuse of the dictionary information and the catalog data. To this end, it is important to realize a creation of the so called "partial set" which is formed by extracting a necessary portion from the electronic catalog system, as well as a free division of data and a recovery of divided data.

However, in the existing systems, there is no flexibility in a method for selecting the dictionary information and the catalog data so that it cannot be realized easily, and there is no means for extracting the catalog data alone. In addition, in the existing systems, data that Is divided as a partial tree cannot read the catalog data by itself alone despite of the fact that it has class identifiers up to the root class, because it contains no class type.

Also, the division using identifiers has been associated with a problem as indicated in Fig. 19 which shows a model according to ISO13584. In Fig. 19, entities according to ISO13584 are expressed as Class_BSU, Table_BSU and Table_element that are identifiers, Domain_restriction. Property_semantics, and Model_class_extension, and a referencing relationship from a start point entity to an end point entity is indicated by an arrow, while a boundary between divided files is indicated by a dashed line.

Normally, the data division is realized through the IS013584 identifier (Basic Semantic Unit), but there can be cases in which there is an entity such as Property_semantics in Fig. 19 that is referred to from two entities to be divided such as Domain_restriction and Table_element. In such a case, the division is difficult to realize by using only the ISO13584 identifier. Also, ISO10303-21 does not define any method for attaching a unique identifier that can be referred among files to an entity so that the division cannot be realized.

### SUMMARY OF THE INVENTION

It is therefore an object of the present invention to provide an electronic catalog utilization system capable of raising the usefulness of the electronic catalog by making the electronic catalog more suitable for distribution, sharing and reuse, by enabling creation and recovery of the partial set.

It is another object of the present invention to provide an electronic catalog utilization system capable of raising the usefulness of the electronic catalog by making the electronic catalog more suitable for distribution, sharing and reuse, by enabling a free division of the electronic catalog.

According to one aspect of the present invention there is provided a supplier side device according to claim 1, and a user side device according to claim 7, and corresponding methods according to claims 11 and 12, and corresponding mediums according to claims 13 and 14.

Other features and advantages of the present invention will become apparent from the following description taken in conjunction with the accompanying drawings.

### BRIEF DESCRIPTION OF THE DRAWINGS

Fig. 1 is a block diagram showing an overall configuration of an electronic catalog utilization system according to one embodiment of the present invention.
Fig. 2 is a diagram showing an exemplary data structure of the catalog data used in the electronic catalog utilization system of Fig. 1.
Fig. 3 is a diagram showing an exemplary display by an electronic catalog browser in the electronic catalog utilization system of Fig. 1.
Fig. 4 is a flow chart showing a processing procedure of a user catalog generation unit in the electronic catalog utilization system of Fig. 1.
Fig. 5 is a flow chart showing a detailed processing procedure at the step S8 in the processing procedure of Fig. 4.
Fig. 6 is a diagram showing an exemplary case of data division using complementary data in the electronic catalog utilization system of Fig. 1.
Fig. 7 is a diagram showing one exemplary form of the complementary data used in the electronic catalog utilization system of Fig. 1.
Fig. 8 is a diagram showing another exemplary form of the complementary data used in the electronic catalog utilization system of Fig. 1.
Fig. 9 is a flow chart showing a processing procedure of a user catalog recovery unit in the electronic catalog utilization system of Fig. 1.
Figs. 10A, 10B, 10C and 10D are diagrams showing exemplary display screens used in the electronic catalog utilization system of Fig. 1 in the case of the step S31 YES in the processing procedure of Fig. 4.
Figs. 11A. 11B, 11C and 11D are diagrams showing exemplary display screens used in the electronic catalog utilization system of Fig. 1 in the case of the step S32 YES in the processing procedure of Fig. 4.
Figs. 12A, 12B, 12C and 12D are diagrams showing exemplary display screens used in the electronic catalog utilization system of Fig. 1 in the case of the step S33 YES in the processing procedure of Fig. 4.
Figs. 13A, 13B, 13C and 13D are diagrams showing exemplary display screens used in the electronic catalog utilization system of Fig. 1 in the case of the step S34 YES In the processing procedure of Fig. 4.
Figs. 14A, 14B, 14C and 14D are diagrams showing exemplary display screens used in the electronic catalog utilization system of Fig. 1 in the case of the step S41 NO in the processing procedure of Fig. 4.
Figs. 15A, 15B, 15C, 15D and 15E are diagrams showing an exemplary display screens used in the electronic catalog utilization system of Fig. 1 in the case of the step S41 YES in the processing procedure of Fig. 4.
Figs. 16A, 16B, 16C, 16D and 16E are diagrams showing exemplary display screens used in the electronic catalog utilization system of Fig. 1 after the step S5 in the processing procedure of Fig. 4.
Fig. 17 is a schematic diagram showing computer readable media that can be used for recording an electronic catalog utilization program according to the present invention.
Fig. 18 is a diagram showing a three level model according to ISO13584.
Fig. 19 is a diagram for explaining a problem encountered at a time of dividing data in the IS013584 model.

### DETAILED DESCRIPTION OF THE PREFERRED EMBODIMENTS

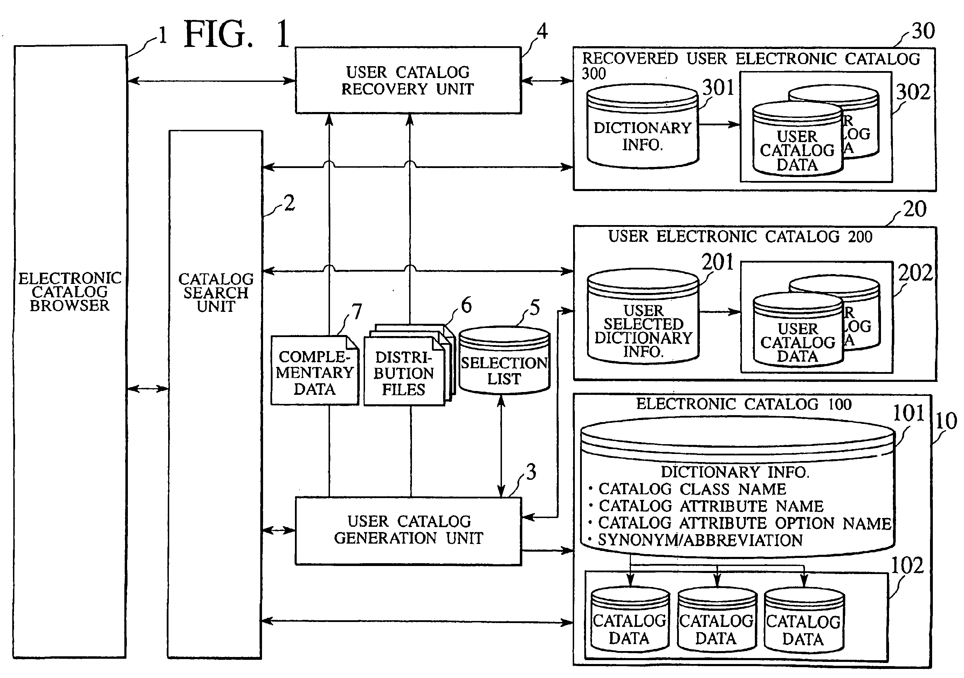

Referring now to Fig. 1 to Fig. 17, one embodiment of the electronic catalog utilization system according to the present invention will be described in detail.

Fig. 1 shows a schematic functional configuration of the electronic catalog utilization system according to this embodiment.

### (overall configuration of the electronic catalog utilization system)

As shown in Fig. 1, the electronic catalog utilization system of this embodiment schematically comprises: an electronic catalog browser 1 for displaying an electronic catalog 100 to a user and enabling user's operation inputs, a catalog search unit 2 for carrying out a search on the electronic catalog 100, a user catalog generation unit 3 for generating a user electronic catalog 200, a user catalog recovery unit 4 for recovering the user electronic catalog as a recovered user electronic catalog 300, an electronic catalog storage unit 10 for storing the electronic catalog 100, a user electronic catalog storage unit 20 for storing the user electronic catalog 200, and a recovered catalog storage unit 30 for storing the recovered user electronic catalog 300.

In Fig. 1, the electronic catalog 100 comprises dictionary information 101 and catalog data 102, which are described in this embodiment by data structures as specified by IS013584, for example.

In the catalog data structure according to ISO13584, the dictionary information 101 contains an information on a catalog provider, dictionary elements describing a "catalog class name" including a hierarchical classification information of the catalog, a "catalog attribute name" for each catalog class, "synonym" or "abbreviation" regarding the name, etc., and an identifier for uniquely identifying them.

On the other hand, the catalog data 102 has a library describing constraint information among catalog attributes, etc., and contents describing actual product information according to the dictionary information. Also, the catalog data 102 have identifiers of the library, the contents and the dictionary information 101 as described above expressed therein, and are existing as a plurality of databases.

The electronic catalog browser 1 accesses the dictionary Information 101 or the catalog data 102 and searches and displays various product data of the electronic catalog 200 through the catalog search unit 2, according to the user input. Also, the electronic catalog browser 1 can search and display the user electronic catalog 200 or the recovered user electronic catalog 300 if they exist by carrying out the similar processing.

Also, this electronic catalog browser 1 can request a recovery of the user electronic catalog using the distribution files 6 and the complementary data 7 with respect to the user catalog recovery Unit 4 according to the user input.

The catalog search unit 2 takes out the dictionary information, i.e. catalog class, or the catalog data that matches a search condition from the electronic catalog 100 by using the search condition received from the electronic catalog browser 1, and gives the search result to the electronic catalog browser 1. Also, the catalog search unit 2 can carry out the similar processing to the user electronic catalog 200 or the recovered user electronic catalog 300 if they exist.

The user catalog generation unit 3 stores the catalog class or the catalog data searched and selected by the catalog search unit 2 Into a selection list 5, and generates the user electronic catalog 200 by using that.

This user electronic catalog 200 is an arbitrary portion of the electronic catalog 100 that is extracted as the so called partial set, so That a user selected dictionary information 201 is a partial set of the dictionary information 101 of the electronic catalog 100, while a user catalog data 202 are partial sets of the catalog data 102. Also, the user catalog generation unit 3 creates the distribution files 6 according to the international standard IS010303-21 format and the complementary data 7 for complementing the distribution file 6.

The user catalog recovery unit 4 generates the recovered user electronic catalog 300 by using the distribution files 6 and the complementary data 7 upon receiving a command from the electronic catalog browser 1.

The recovered user electronic catalog 300 is a partial set of the electronic catalog 100 or the user electronic catalog 200. The distribution files 6 are obtained by dividing the user electronic catalog 200 into several pieces such that the recovered user electronic catalog 300 recovered by using a selected part of the distribution files 6 may not necessarily coincide with the user electronic catalog 200.

### (Structure of the electronic catalog)

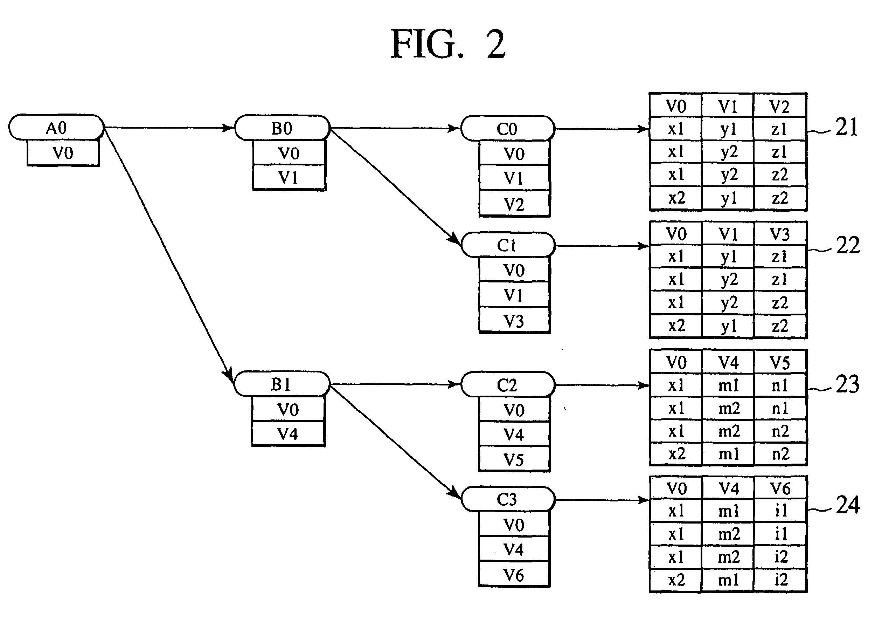

Next, the data structure of the electronic catalog 100 will be described. Fig. 2 shows a data structure of the catalog contents described in the electronic catalog.

In Fig. 2, a tree structure portion from A0 to CO-C3 is expressing Information containing catalog classification hierarchies, and this portion is described in the dictionary Information 101 as a catalog terminology system. Note that, in the catalog terminology system used in this embodiment, A0 has sub-classes B0 and B1, B0 has sub-classes C0 and C1, and B1 has sub-classes C2 and C3. Then, each class has attributes which are inherited to the sub-classes.

Also, in Fig. 2, tables 21-24 describe the actual product catalog data (contents), where the table 21 indicates the catalog data for four forms of a product of a type C0 having various combinations of values x1-x2 for an attribute V0, values y1-y2 for an attribute V1, values z1-z2 for an attribute V2, for example. Note that these contents are described in the catalog data 1.02.

### (Screen configuration of the electronic catalog browser 1)

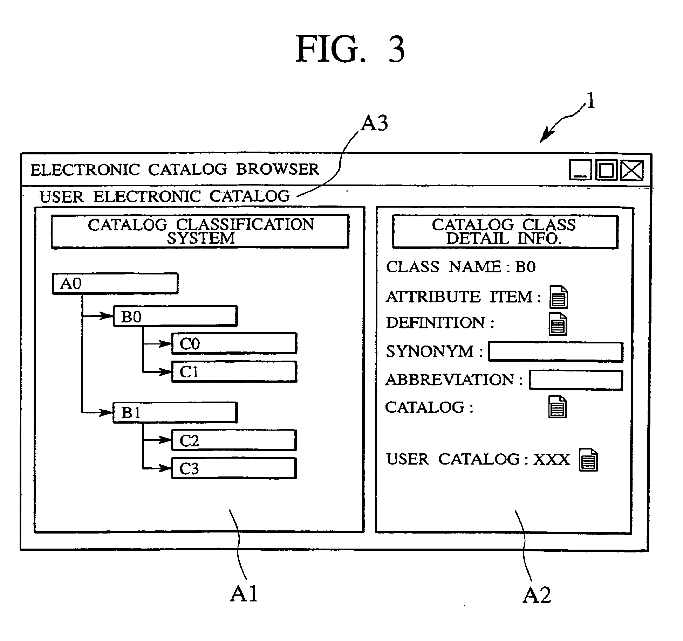

Next, a screen configuration of the electronic catalog browser 1 will be described. Fig. 3 shows an example of the electronic catalog browser 1 displayed on a display of a general purpose terminal device such as PC, for example. In this embodiment, for the sake of simplicity, it is a display in a simple configuration for displaying the classification system of the catalog classes and the detail Information regarding the catalog class.

As shown in Fig. 3, the electronic catalog browser 1 of this embodiment is formed by an area A1 for displaying the catalog classification system as a tree, an area A2 for displaying the catalog class detail information (class name, attribute item, etc.) and an area A3 for entering a division format in a form of a pull-down menu.

### (Operation of the user catalog generation unit 3)

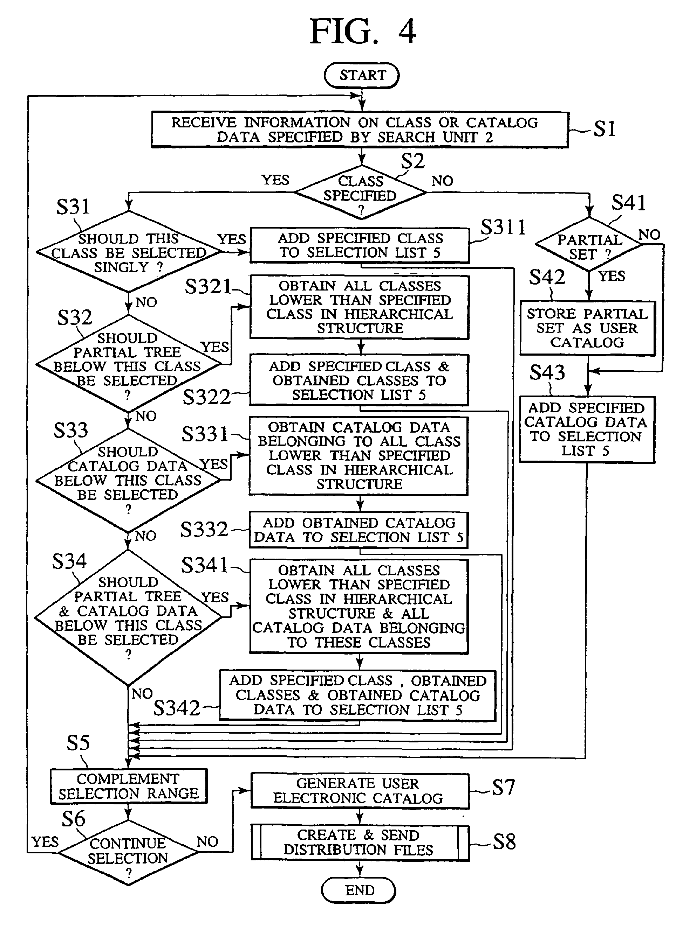

Next, the operation for generating the user electronic catalog 200 in the electronic catalog utilization system of this embodiment will be described. Fig. 4 is a flow chart for the processing by the user catalog generation unit 3.

First at the step S1, the catalog generation unit 3 receives information on class, catalog data, or partial set of catalog data specified by the catalog search unit 2. Here, the catalog search unit 2 uses a search method such as that of entering a keyword and searching out a class name, a catalog attribute bane, a catalog value or the like of a corresponding tree structure dictionary, and extracting that class, catalog data, or partial set of catalog data, or that in which a user directly specifies class or catalog data, for example. In the case where the partial set of catalog data is extracted as a search result, this partial set is newly set as the user catalog data.

At the step S2, what is specified at the step S1 is a class or not is Judged. If it is a class, the processing proceeds to the step S31, whereas otherwise, i.e. if it is a catalog data, the processing proceeds to the step S41.

At the step S31, whether the class specified at the step S1 should be selected singly as the user selected dictionary information 201 of the user electronic catalog 200 or not is Judged. When it should be selected singly, the processing proceeds to the step S311 where this class is registered into the selection list 5. Otherwise the processing proceeds to the step S32.

At the step S32, whether all classes at lower positions on the hierarchical structure than the class specified at the step S1 should be selected as the user selected dictionary data 201 of the user electronic catalog 200 or not is judged. When they should be selected, the processing proceeds to the step S321 where all classes at lower positions on the hierarchical structure than this class are obtained, and the step S322 where all the obtained classes and the specified class are registered into the selection list 5. Otherwise, the processing proceeds to the step S33.

At the step S33, whether all catalog data belonging to all classes at lower positions on the hierarchical structure than the class specified at the step S1 should be selected as the user catalog data 202 of the user electronic catalog 200 or not is judged. When they should be selected, the processing proceeds to the step S331 where all classes at lower positions on the hierarchical structure than this class are obtained and all the catalog data belonging to these classes are obtained, and the step 5332 where all the obtained catalog data are registered into the selection list S. Otherwise, the processing proceeds to the step S34.

At the step S33, whether all classes at lower positions on the hierarchical structure than the class specified at the step S1 and all catalog data belonging to these classes should be selected respectively as the user selected dictionary data 201 and the user catalog data 202 of the user electronic catalog 200 or not is Judged. When they should be selected, the processing proceeds to the step S341 where all classes at lower positions on the hierarchical structure than this class are obtained and all the catalog data belonging to these classes are obtained, and the step S342 where all the obtained classes and catalog data are registered into the selection list 5. Otherwise, the processing proceeds to the step S5.

On the other hand, when the processing proceeds from the step S2 to the step S41, next at the step S41, whether the catalog data specified at the step S1 is a partial set or not is judged. If it is a partial set, the processing proceeds to the step S42, whereas otherwise the processing proceeds to the step S43. At the step S41. the specified partial set of catalog data is stored as the user catalog data. At the step S43, the specified catalog data or partial set of catalog data, i.e. the user catalog data, is registered into the selection list 5.

At the step S5, the classes or catalog data selected by the steps S31-S34 or the steps S41-S43 are compared with the already selected classes or catalog data, and if there is any class that is existing between the newly selected class (or a class to which the newly selected catalog data belongs) and the already selected class (or a class to which the already selected catalog data belongs), such a class is added to the selection list 5, so as to complement the selection range.

By this complementing between classes, the function as the dictionary can be complemented without making the user conscious of it. Note that this complementing between classes at this step S5 may be realized efficiently by using a route search algorithm of the graph theory.

At the step S6, whether the user electronic catalog selection processing should be continued or not is judged. If it should be continued, the processing returns to the step S1. Otherwise the user electronic catalog selection processing is terminated and the processing proceeds to the step S7.

At the step S7, the user electronic catalog 200 is generated by using the selection list 5 and stored. This processing is intended to provide the user electronic catalog unique to the user whenever the user requests.

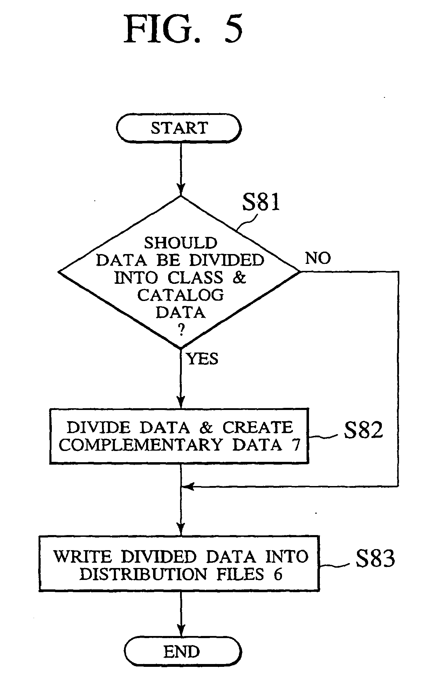

Then at the step S8, one or a plurality of distribution files 6 are created by dividing the data of the user electronic catalog 200 generated at the step S7 into the distribution files 6 and sent to the user. At this point, the complementary data 7 necessary in complementing the data is also generated. Fig. 5 is the flow chart for the processing at this step S8 of Fig. 4.

First at the step S81. whether the data should be divided into class and catalog data or not is judged. If it should be divided, the processing proceeds to the step S82, whereas otherwise the processing proceeds to the step S83.

At the step S82, the division of the data into class and catalog data is carried out. Here, a data that cannot be divided by using the identifier (Basic Semantic Unit) of ISO13584 is divided by creating the complementary data 7 as will be described below.

Then at the step S83. the divided data are written into a plurality of the distribution files 6, and the processing is terminated.

### (Processing for creating the complementary data 7)

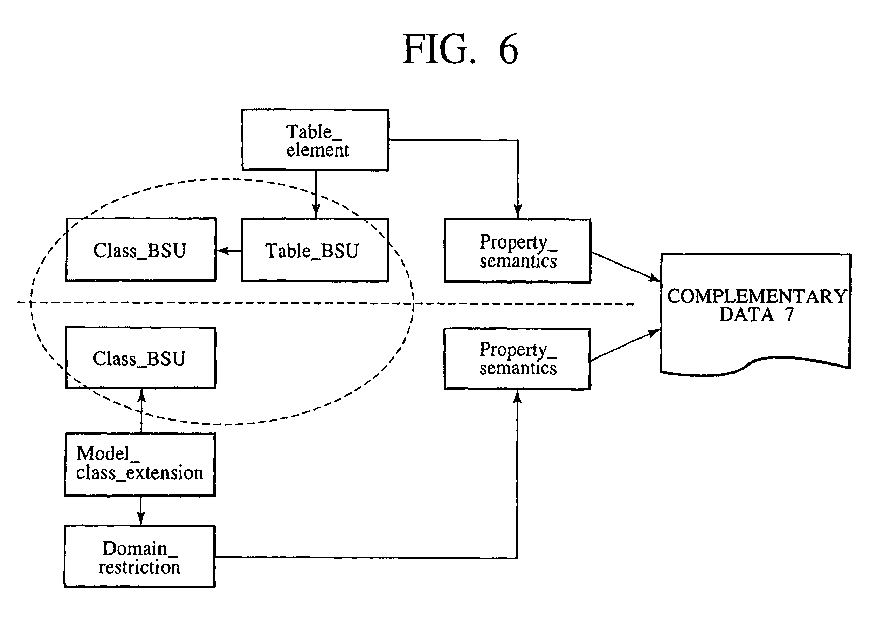

The creation of the complementary data that is carried out in the above described data dividing processing will be described now. Fig. 6 shows an exemplary case of dividing the electronic catalog (IS013584 model) by using the complementary data 7.

In the model of Fig. 6, "Class_BSU" refers to "Table_BSU", "Table_element" refers to "Table_BSU" and "Property_semantics". "Model_class_extension" refers to "Class_BSU" and "Domain_restriction", and "Domain_restriction" also refers to "Property_semantics". In this embodiment, in the case of dividing the electronic catalog data in such a structure, an information (a correspondence among entities) regarding "Property_semantics" that is referred from both "Table_element" and "Domain_restriction" is created as the complementary data 7.

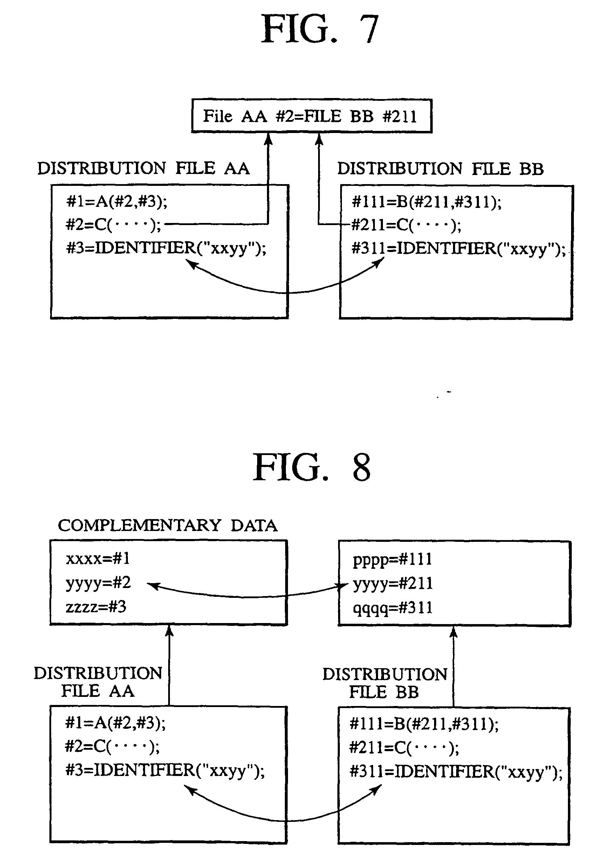

Fig. 7 shows an example of the complementary data 7 to be generated by the above described step S82. As shown in Fig. 7, the complementary data 7 indicating the correspondence among entities across files is created separately from the ISO10303-21 files. In this way, it becomes possible to freely divide and then recover the electronic catalog data.

Note that the complementary data 7 can also be realized by using an identifier for uniquely identifying each entity as shown in Fig. 8. In the case of using such identifiers for complementary data, the data will be recovered by regarding those entities which have the identical identifier for complementary data as an identical entity. Similarly, the Identifiers of IS013584 are also used.

### (Operation of the user catalog recovery unit 4)

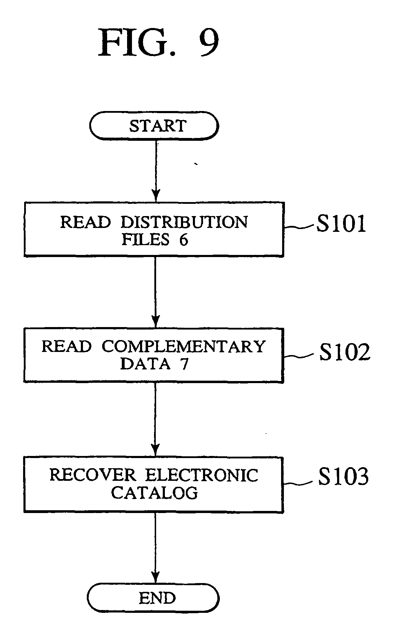

A method for recovering the electronic catalog data that is divided as described above will be described now. Fig. 9 is a flow chart for the processing by the user catalog recovery unit 4.

First at the step S101. the distribution files 6 are read according to a request from the user.

Also at the step S102. the complementary data 7 associated with the distribution files 6 is read.

Then at the step S103, the user electronic catalog is recovered from the data of the distribution files 6 by using the complementary data 7, so as to generate the recovered user electronic catalog 300.

In the case of using the complementary data 7 as shown in Fig. 7 which records the correspondence, the data are recovered by referring to the correspondence described in the complementary data 7. The identifiers of IS013584 can uniquely determine positions on the tree structure, so that the entities that can be divided by the identifiers of IS013584 can be recovered by using these identifiers.

### (Operation on a screen of the electronic catalog browser 1)

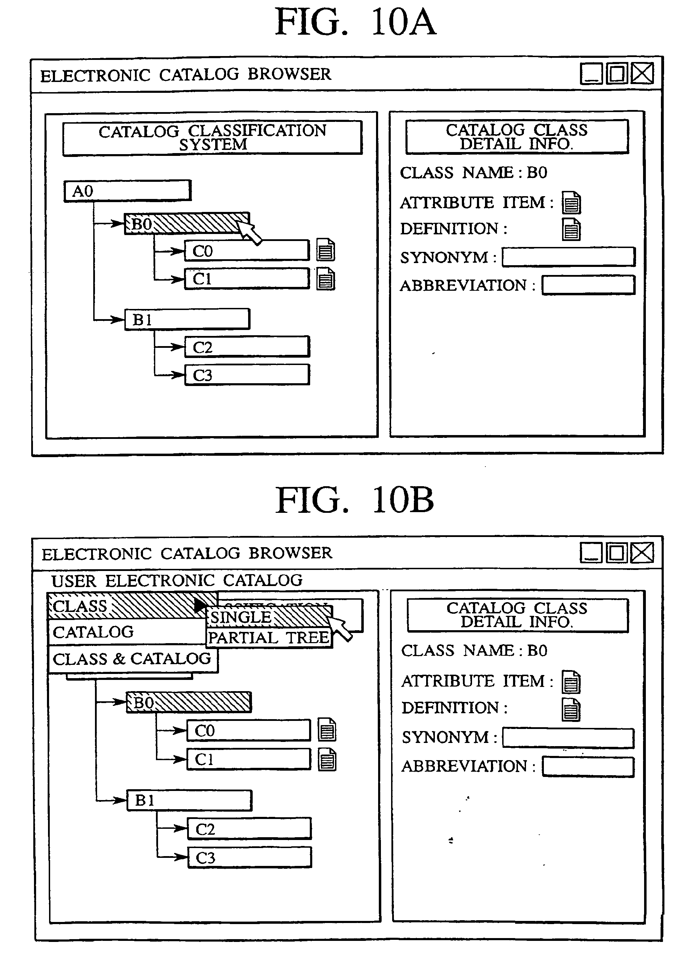

Next, the procedure of the operation on a screen of the electronic catalog browser 1 will be described along the flow chart of Fig. 4 described above. Figs. 10A to 10D through Fig. 16A to 16E show exemplary display screens displayed on a display of the electronic catalog browser 1.

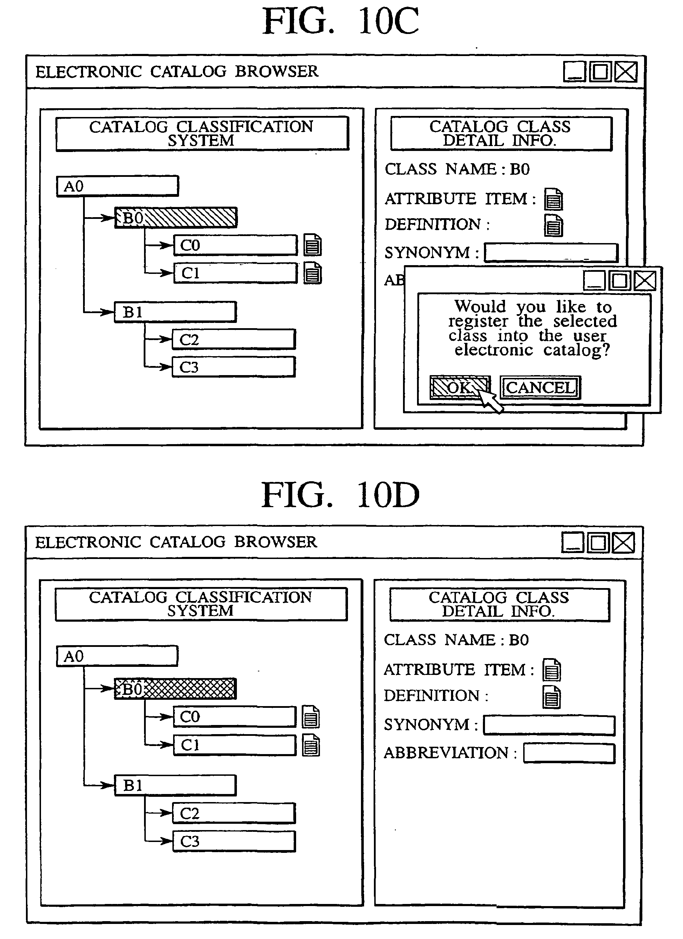

First, as shown In Fig. 10A, the search result by the catalog search unit 2 is displayed, on which the user can specify any desired class or catalog data by using a mouse or the like (the step S1). In the example shown in Figs. 10A to 10D is directed to the case where the user specifies a class that should be selected singly as the user selected dictionary Information 201 of the user electronic catalog 200, that is the case where the step S31 in Fig. 4 is carried out. For this processing, the user specifies a class B0 as shown in Fig. 10A and indicates that it is a "single" class by using a pull-down menu or the like provided on the screen as shown in Fig. 10B. Also, according to the need, an input processing regarding whether the selected class should be registered into the user electronic catalog or not is carried out as shown in Fig. 10C. In this embodiment, when the selected class is registered, the registered class will be indicated by changing a display color of the registered class, as Indicated by a different hatching used in Fig. 10D.

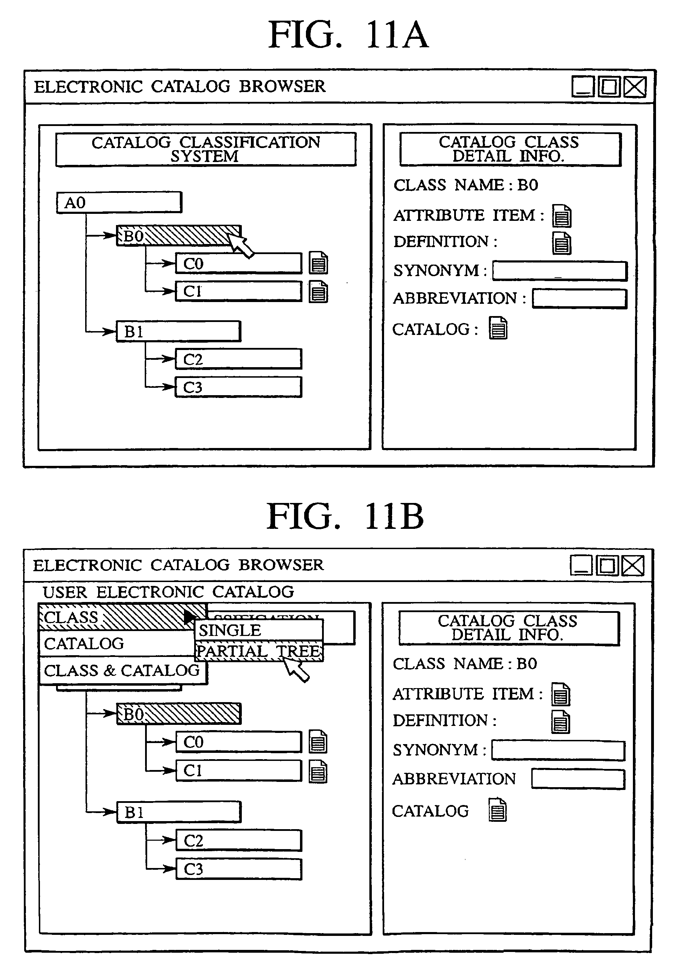

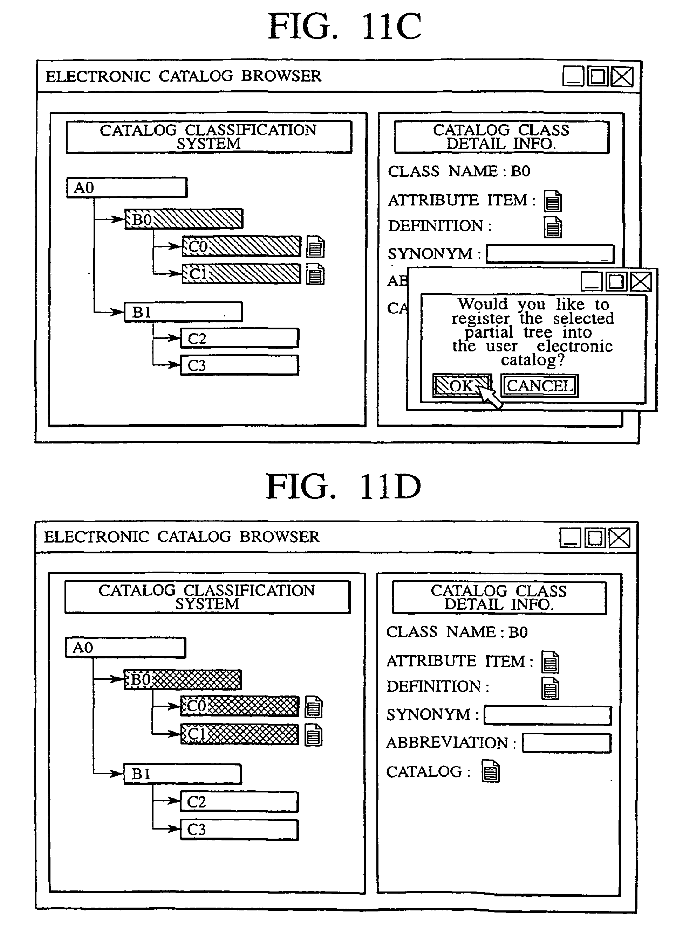

On the other hand, in the case where the "single" class is not selected but a partial tree is selected as a set at the step S31, that is the case where the step S32 is carried out, after the search result by the catalog search unit 2 is displayed and a class B0 is specified as shown in Fig. 11A, "partial tree" is entered from the pull-down menu as shown in Fig. 11B. As a result, the class B0 and classes below the class B0 will be selected together. Then according to the need, an input processing regarding whether the selected partial tree should be registered into the user electronic catalog or not is carried out as shown in Fig. 11C. Here, similarly as described above, the registered partial tree will be Indicated by changing a display color of the registered partial tree, as indicated by a different hatching used in Fig. 11D.

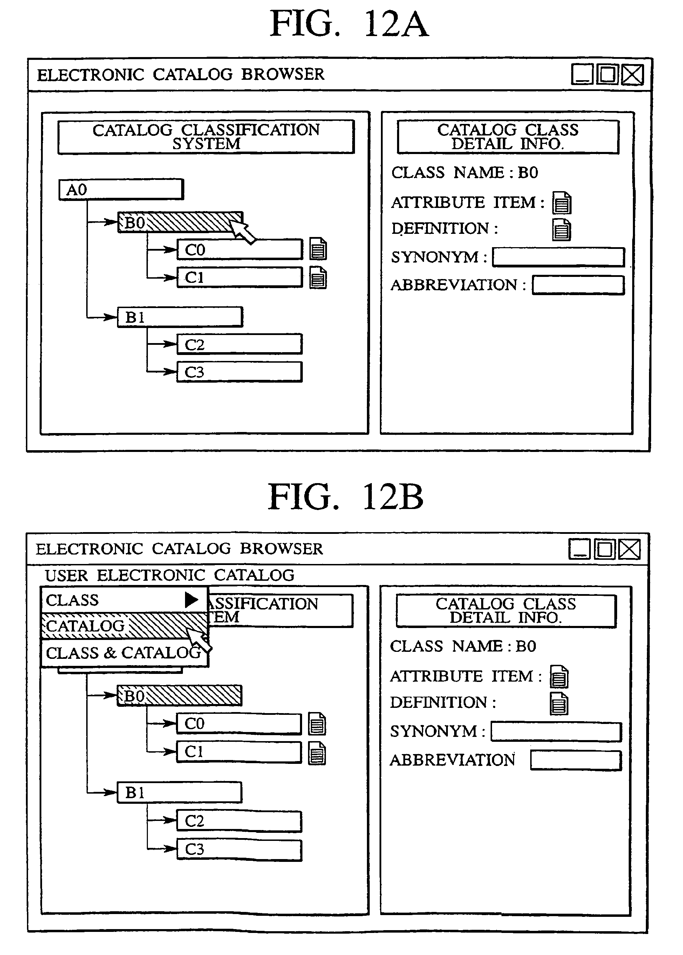

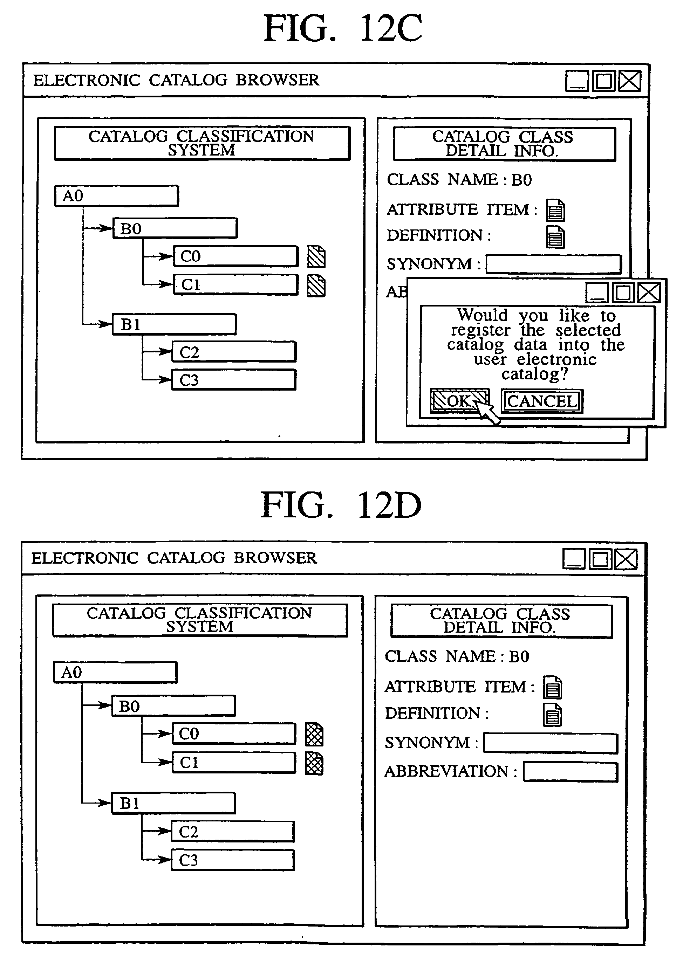

Also, in the case where all the catalog data belonging to all the classes below the specified class should be selected as the user catalog data 202 of the user electronic catalog 200, that is in the case where the step S33 is carried out, after the search result by the catalog search unit 2 is displayed and a class B0 is specified as shown in Fig. 12A. "catalog" is entered from the pull-down menu as shown in Fig. 12B. As a result, the catalog data belonging to all the classes below the class B0 will be selected together. Then according to the need, an input processing regarding whether the selected catalog data should be registered into the user electronic catalog or not is carried out as shown in Fig. 12C. Here, the registered catalog data will be Indicated by changing a display color of its icon, as indicated by a different hatching used in Fig. 12D.

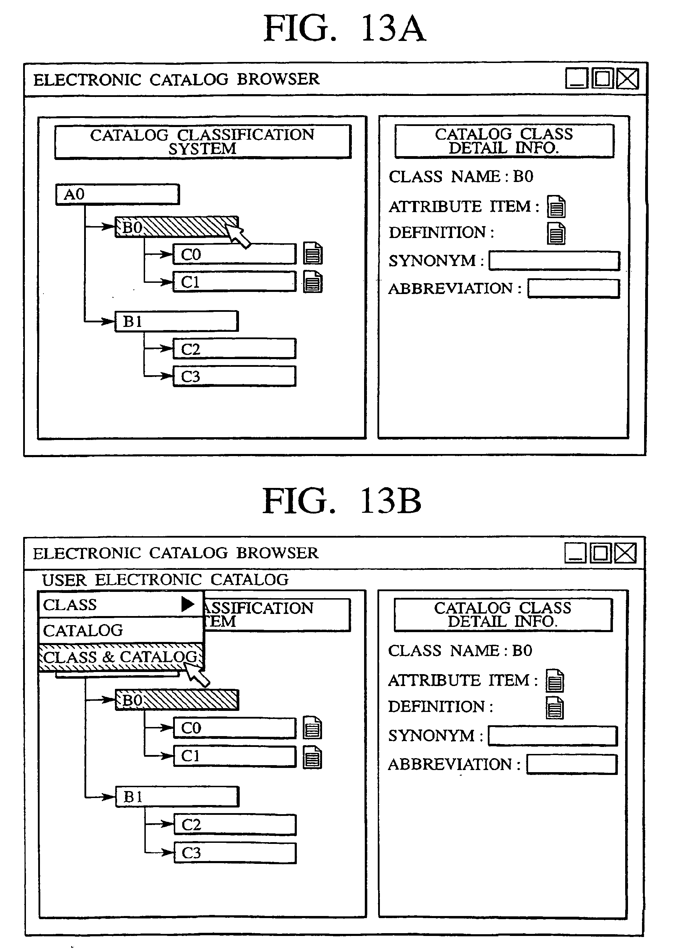

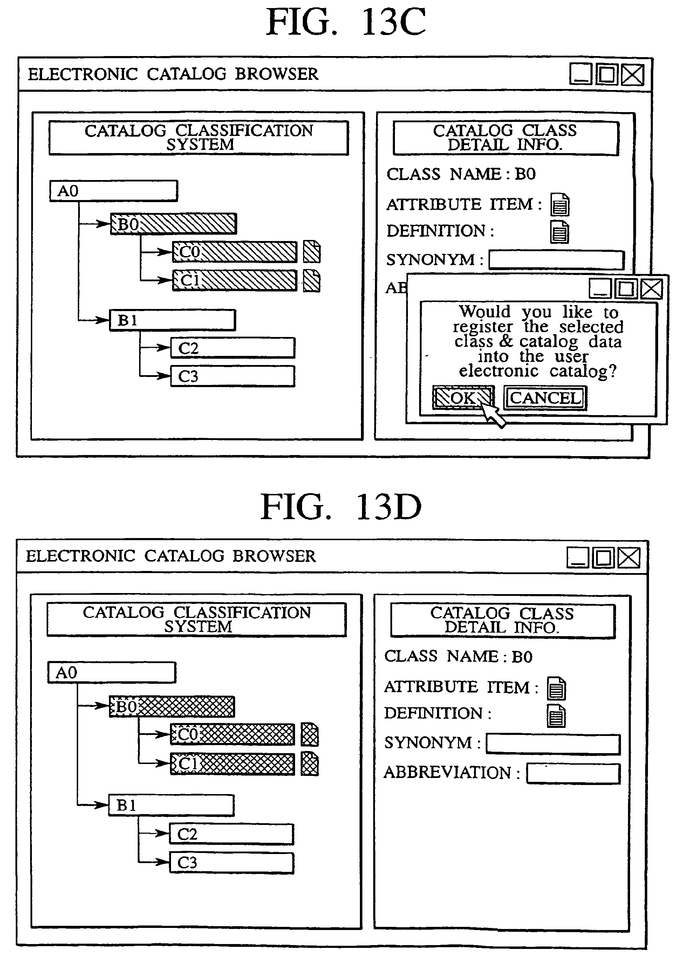

Also, in the case where the partial tree with the specified class at a top should be selected as the user selected dictionary information 201 of the user electronic catalog 200 and all the catalog data belonging to all the classes below the specified class should be selected as the user catalog data 202 of the user electronic catalog 200, that is in the case where the step S34 is carried out, after the search result by the catalog search unit 2 is displayed and a class B0 is specified as shown in Fig. 13A, "class & catalog" is entered from the pull-down menu as shown in Fig. 13B. As a result, the class B0 and all the classes below the class B0, and the catalog data belonging to all the classes below the class B0 will be selected together. Then according to the need, an Input: processing regarding whether the selected class and catalog data should be registered into the user electronic catalog or not is carried out as shown in Fig. 13C. Here, the registered class and catalog data will be indicated by changing a display color of their boxes or Icons, as indicated by a different hatching used in Fig. 13D.

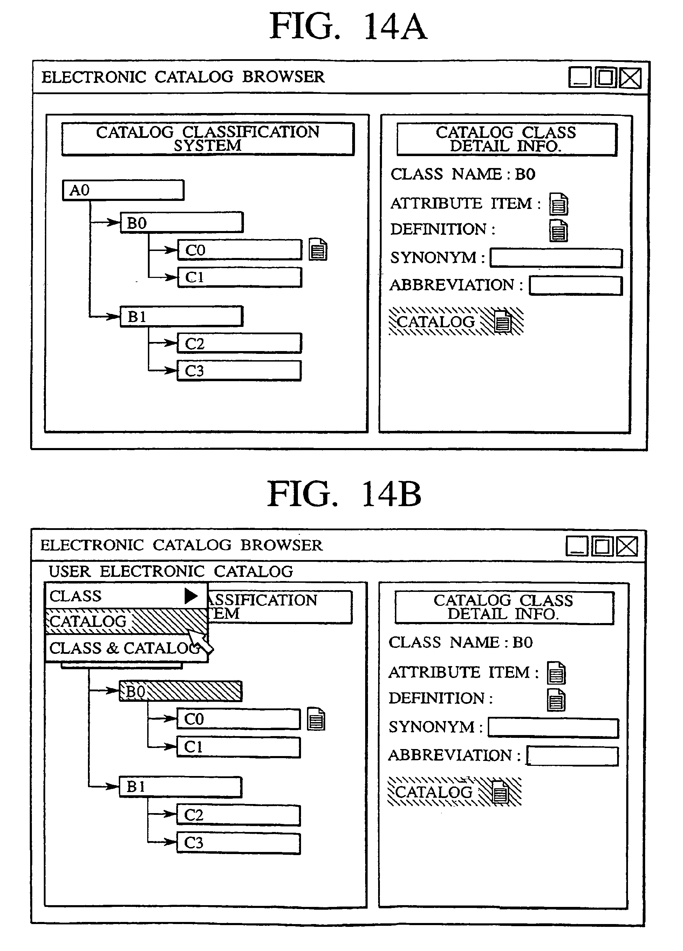

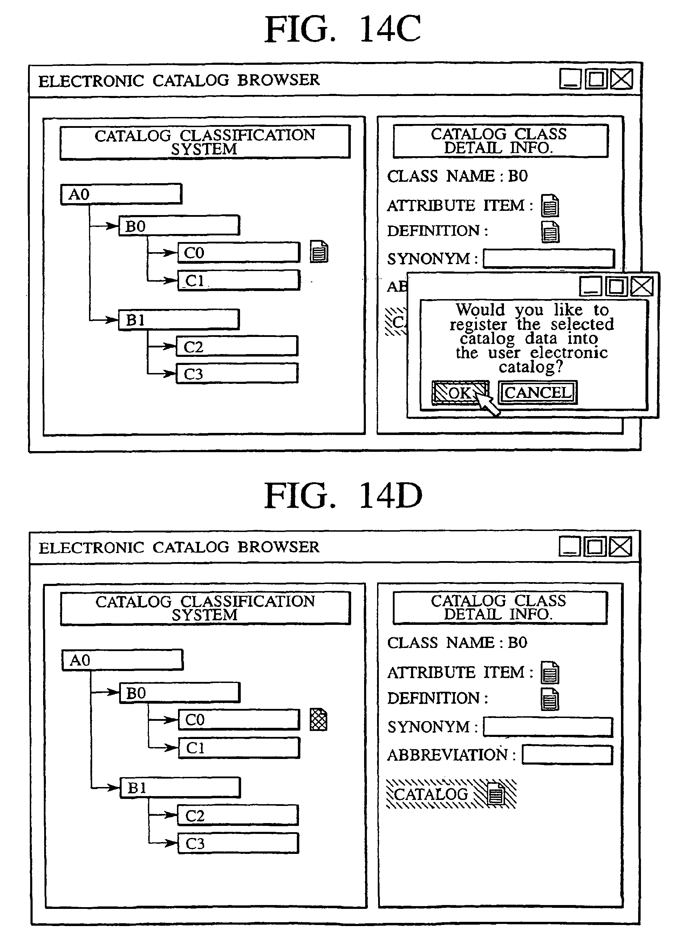

It is also possible to specify the catalog data alone. For example, when only one catalog data is detected as the search result by the catalog search unit 2 as indicated by a single "CATALOG" line in the catalog class detail Information field shown in Fig. 14A, it is possible to select a single catalog data alone by entering "catalog" from the pull-down menu as shown in Fig. 14B. Even in this case, according to the need, an input processing regarding whether the selected catalog data should be registered into the user electronic catalog or not is carried out as shown in Fig. 14C, and the registered catalog data, which is assumed to be a part of the catalog data for a class C0 here, will be indicated by changing a display color of its icon, as indicated by a different hatching used in Fig. 14D.

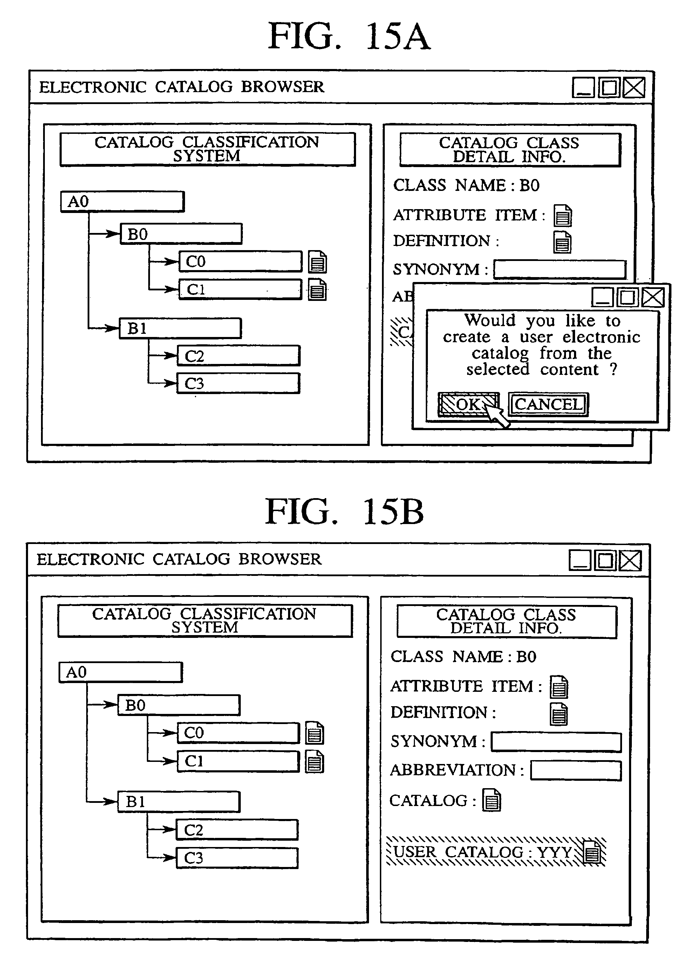

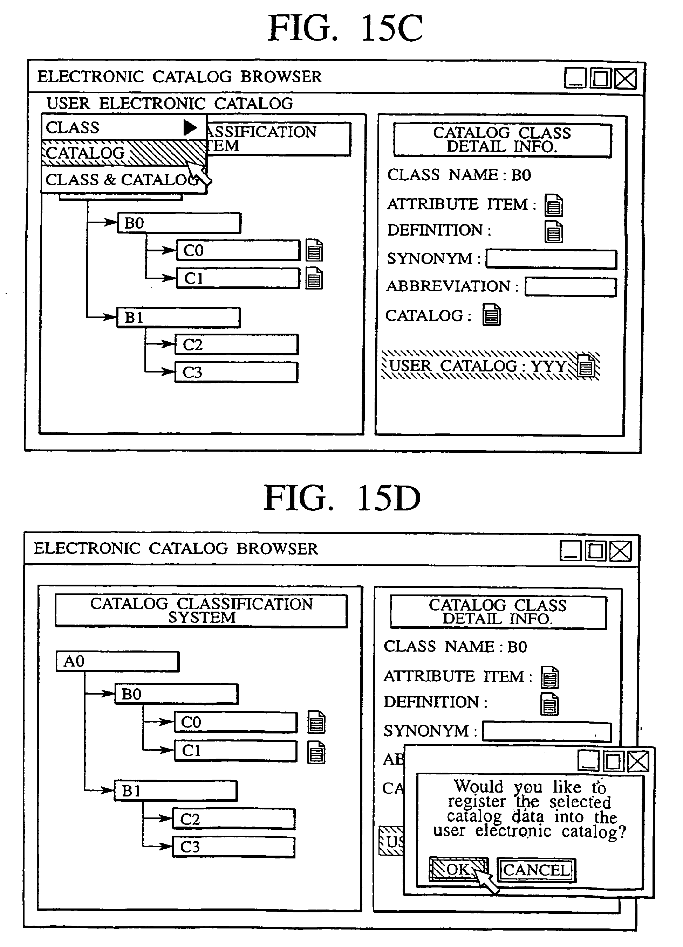

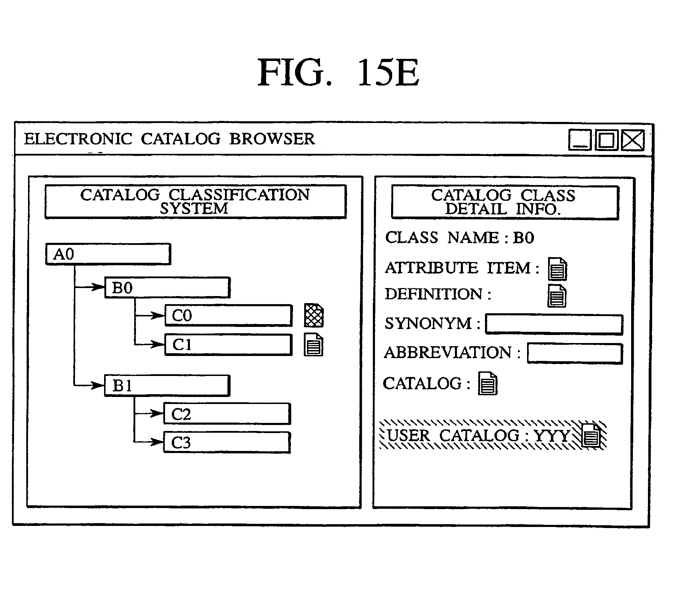

As another way of specifying the catalog data alone, when only one catalog data is detected as the search result by the catalog search unit 2 as Indicated by a single "CATALOG" line in the catalog class detail Information field shown in Fig. 15A and Fig. 15B and the user catalog is created from this catalog data as indicated by a "USER CATALOG" line in the catalog class detail information field shown in Fig. 15B, for example. It is possible to select this user catalog data alone by entering "catalog" from the Pull-down menu as shown in Fig. 15C. Even in this case, according to the need, an input processing regarding whether the selected catalog data should be registered into the user electronic catalog or not is carried out as shown in Fig. 15D, and the registered catalog data, which is assumed to be a part of the catalog data for a class C0 here, will be indicated by changing a display color of its icon, as indicated by a different hatching used in Fig. 15E.

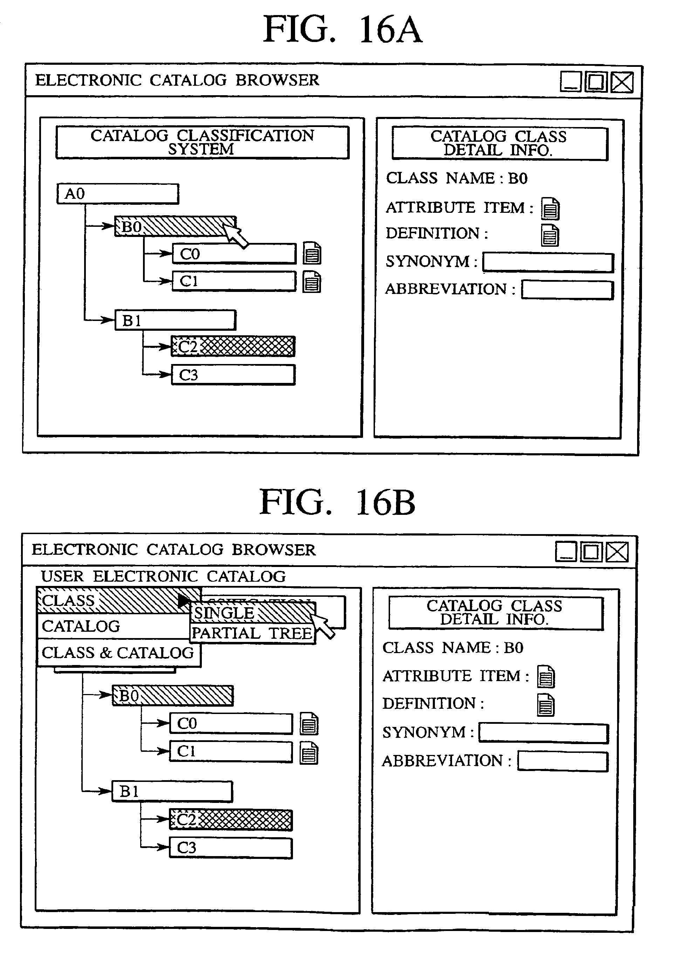

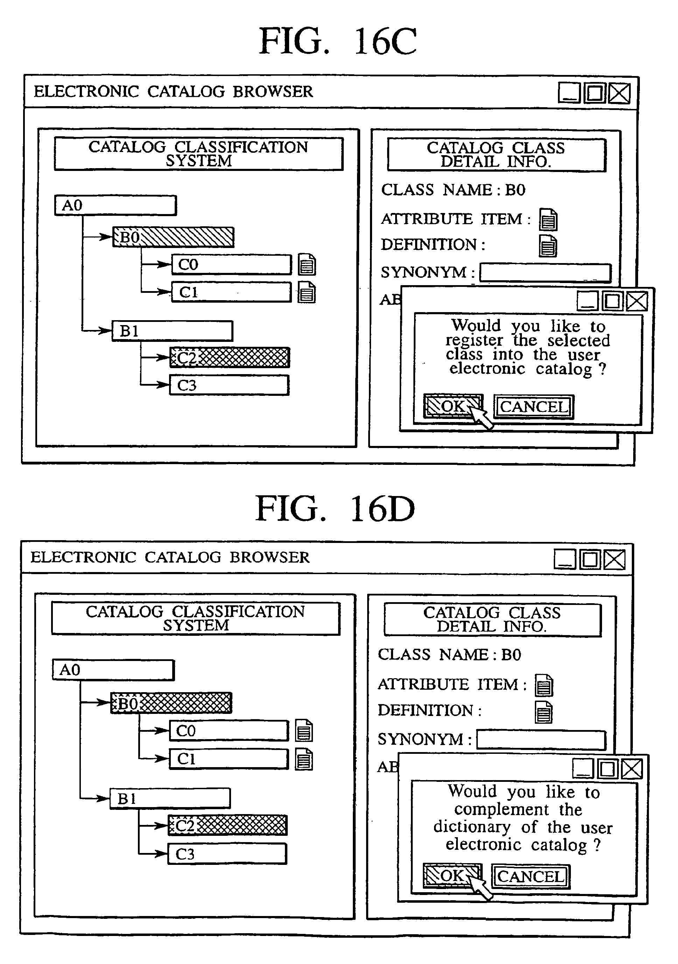

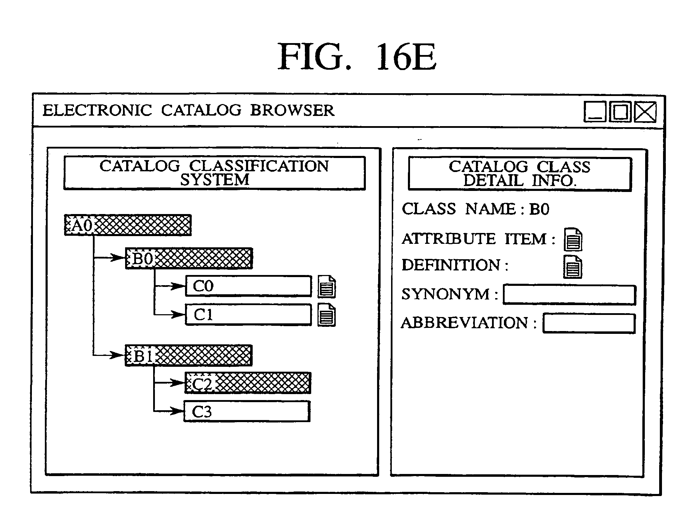

It is also possible to specify only the class as a "single" class. For example, when one class C2 is already registered in the selection list 5 and another class B0 is detected as the search result by the catalog search unit 2 as shown in Fig. 16A, it is possible to select this single class B0 by entering "single" from the pull-down menu as shown in Fig. 16B. Even in this case, according to the need, an input processing regarding whether the selected class should be registered into the user electronic catalog or not is carried out as shown in Fig. 16C. Also in this case, according to the need, an input processing regarding whether the dictionary of the user electronic catalog should be complemented according to the registered classes or not can also be carried out as shown in Fig. 16D, and the registered classes as well as the complemented classes will be indicated by changing a display color of their boxes as indicated by a different hatching used in Fig. 16E.

### (Effects)

According to the electronic catalog utilization system of this embodiment. It is possible to realize a system that can enable easy sharing and reuse of only the product information required by the user. Namely, only the dictionary information containing the class Information and the product data required by the user are selected by an easy and flexible mechanism for selection, and their data are divided by using identifiers that can uniquely identify entities across divided files as well as the identifiers of ISO13584, and the user electronic catalog so obtained is provided to the user, such that it becomes possible to reduce the distribution data. It is also possible to display the electronic catalog that is acquired according to the user's viewpoint.

### (Electronic catalog Utilization program)

Note that the electronic catalog utilization system described above can be realized by producing a software described in a prescribed programming language and installing this software into a general purpose computer such as PC, for example.

Namely, a catalog editing software can be formed by a program for displaying the electronic catalog in a tree structure and displaying the catalog data (contents) and the dictionary information (classes and attributes) in such a form that a selection by the operations on a screen is possible, a program for generating the user catalog data In a form of the partial set obtained by combining the catalog data and/or the dictionary information selected from the electronic catalog, and a program for generating the complementary data describing the referencing relationship on the tree structure of the catalog data or the dictionary Information contained in the partial set.

In addition, a catalog recovery software can be formed by a program for recovering the user electronic catalog either entirely or partially from the user catalog data and the complementary data.

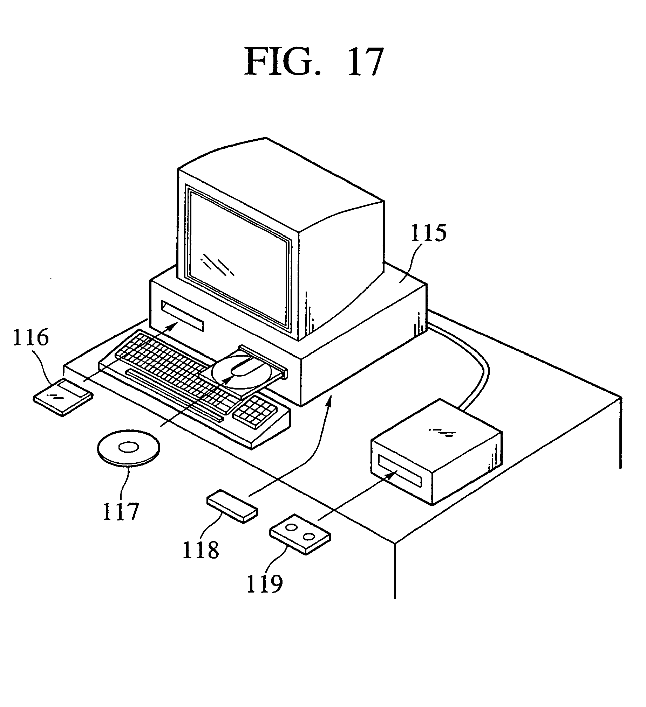

The catalog editing software and the catalog recovery software so produced can be recorded on recording media 116-119 that are readable by a general purpose computer 115 as shown in Fig. 17. More specifically, as shown in Fig. 17, these softwares can be recorded on computer readable recording media such as a magnetic recording medium like a floppy disk 116 or a cassette tape 119, an optical disk like a CD-ROM 117, and a RAM card 118.

Note that the catalog editing software and the catalog recovery software described above can be implemented in forms of Independent applications, or in a form of a composite application that contains these softwares In an all-in-one package form.

Then, by using such computer readable recording media that record these softwares, it is possible to easily realize storing, carrying, and installing of useful programs that have an effect of raising the usefulness of the electronic catalog by making the electronic catalog more suitable for distribution, sharing and reuse, by enabling a free division of the electronic catalog as well as creation and recovery of the partial set.

According to the electronic catalog utilization system of the present invention, it is possible to realize a system capable of easily sharing and reusing only the production Information required by the user. Namely, it is possible to adopt an easy and flexible selection mechanism, in order to raise the usefulness of the electronic catalog by making the electronic catalog more suitable for distribution, sharing and reuse, by enabling a free division of the electronic catalog as well as creation and recovery of the partial set.

In particular, according to the present invention, it is possible to produce the partial set of the electronic catalog using any desired combination of the dictionary information and the catalog data that is not necessarily defined in a prescribed electronic catalog standard, so that it is possible to display the electronic catalog in a free form and thereby improve the usefulness and the generality of the electronic catalog. Namely, the partial set of the electronic catalog according to the present Invention can read the catalog data by Itself alone, without using the entire electronic catalog.

Here, the prescribed electronic catalog standard can be any international standard such as ISO13584 (Parts Library), ISO10303-21, and IEC61360. for example. Also, the product classification information can be given by "product class (class)" or "attribute item (property)", for example. Also, the identifier can be given by BSU code, for example.

In addition, according to the present invention, the partial set is divided into distribution files of a prescribed format, so that it is possible to distribute only the information required by the user by eliminating unnecessary information, and It is possible to reduce the data size as well as the network load at a time of distribution. Namely, a part of the distribution files that contains the information that the user already has can be eliminated and only the remaining part of the distribution Tiles can be sent to the user. Moreover, the complementary data is generated at a time of the division into the distribution files, so that it is possible to reproduce the tree structure before the division easily by using the correspondence described in the complementary data at a time of viewing the user electronic catalog. As a result, it is possible to make the electronic catalog more suitable for distribution and circulation.

Furthermore, according to the present invention, any desired partial set selected by the user can be recovered partially or entirely by using the complementary data, so that it is possible to transmit the necessary information quickly and conveniently without increasing the file size used for distribution. In order to recover the entire user electronic catalog from the partial set, the complementary data can contain an information on a position in the standardized tree structure such that the partial set can be developed on the entire tree structure according to the standard and the position information.

More specifically, the dictionary information and the catalog data that constitute the electronic catalog generally have very large sizes so that sending the entire electronic catalog from the supplier (server) side to the user (client) side can be quite inefficient and inconvenient. For this reason, it is desirable to be able to freely divide the electronic catalog to create a partial set in a suitable size, and send only such a partial set that contains the information required by the user. However, the conventional ISO13584 standard does not support such a free division of the electronic catalog. In this regard, the present invention enables a free division of the electronic catalog to create a partial set in a suitable size by utilizing the complementary data as described above, so that it becomes possible to realize an efficient and convenient electronic catalog providing service in which the supplier side can create and send only a partial set in response to a request from the user.

It is to be noted that, in practice, the configuration of the electronic catalog system shown in Fig. 1 can be divided into a supplier side device and a user side device in various ways.

For example, the supplier side device can be formed by the user catalog generation unit 3, the selection list 5, the electronic catalog storage unit 10 and the user electronic catalog storage unit 20.

It is also possible to form the supplier side device by the electronic catalog storage unit 10, while forming the user side device by the electronic catalog browser 1, the user catalog generation unit 3, the selection list 5. and the user electronic catalog storage unit 20.

It is also possible to form the supplier side device by the user catalog generation unit 3, the selection list 5 and the electronic catalog storage unit 10, while forming the user side device by the electronic catalog browser 1 and the user electronic catalog storage unit 20.

It is also possible to form the supplier side device by the user catalog generation unit 3, the selection list 5, the distribution files 6, the complementary data 7, the electronic catalog storage unit 10 and the user electronic catalog storage unit 20.

It is also possible to form the supplier side device by the electronic catalog storage unit 10, while forming the user side device by the electronic catalog browser 1. the user catalog generation unit 3, the selection list 5. the distribution files 6, the complementary data 7 and the user electronic catalog storage unit 20.

It is also possible to form the supplier side device by the user catalog generation unit 3, the user catalog recovery unit 4, the selection list 5, the distribution files 6, the complementary data 7, the electronic catalog storage unit 10, the user electronic catalog storage unit 20, and the recovered user electronic catalog storage unit 30.

It is also possible to form the supplier side device by the user catalog recovery unit 4 and the electronic catalog storage unit 10, while forming the user side device by the electronic catalog browser 1, the user catalog generation unit 3, the selection list 5, the distribution files 6, the complementary data 7, the user electronic catalog storage unit 20 and the recovered user electronic catalog storage unit 30.

It is also possible to form the supplier side device by the electronic catalog storage unit 10, while forming the user side device by the electronic catalog browser 1, the user catalog generation unit 3, the user catalog recovery unit 4, the selection list 5, the distribution files 6, the complementary data 7, the user electronic catalog storage unit 20 and the recovered user electronic catalog storage unit 30.

It is also possible to form the supplier side device by the user catalog recovery unit 4, the electronic catalog storage unit 10 and the recovered user electronic catalog storage unit 30, while forming the user side device by the electronic catalog browser 1, the user catalog generation unit 3, the selection list 5, the distribution files 6, the complementary data 7 and the user electronic catalog storage unit 20.

It is also possible to form the supplier side device by the user catalog generation unit 3, the selection file 5. the electronic catalog storage unit 10 and the user electronic catalog storage unit 20, while forming the user side device by the electronic catalog browser 1, the user catalog recovery unit 4, the distribution files 6 and the complementary data 7.

In general, the electronic catalog browser 1 has to be provided on the user side device, and the electronic catalog storage unit 10 have to be provided on the supplier side device.

The catalog search unit 2 can be provided on both the user side device and the supplier side device, according to search targets. For instance, when the user electronic catalog storage unit 20 is provided on the user side device, the catalog search unit 2 can be provided on the user side device.

A combination of the user catalog generation unit 3 and the user electronic catalog storage unit 20 can be provided on either side, together or separately. A combination of the user catalog recovery unit 4 and the recovered user electronic catalog storage unit 30 can also be provided on either side, together or separately. The selection list 5 can be provided on either side, and a combination of the distribution files 6 and the complementary data 7 can be provided on either side. In either case, the distribution files 6 and the complementary data 7 are to be utilized by both the user catalog recovery unit 4 and the selection list 5.

It is also to be noted that, besides those already mentioned above, many modifications and variations of the above embodiments may be made without departing from the novel and advantageous features of the present invention. The scope of the invention is defined by the appended claims.

## Claims

1. A supplier side device for providing an electronic catalog (100) for accesses from users, comprising:
an electronic catalog unit (10) configured to store the electronic catalog (100) for accesses from users, the electronic catalog (100) being formed by catalog data (102) on products offered to the users by a supplier and a dictionary information (101) indicating a classification structure of the catalog data (102) in a form of a tree structure; and
a user catalog generation unit (3) configured to generate a user electronic catalog (200) by extracting a partial set of the catalog data (102) and/or the dictionary information (101) selected from the electronic catalog (100), according to a request from a user, and to provide the user electronic catalog (200) for access from the user;
wherein the dictionary information (101) indicates the tree structure formed by hierarchically arranged classes for classifying the catalog data (102) and each class has attributes which are inherited to the sub-classes;
the request from the user specifies any desired class and/or catalog data (102) of the user,
the user catalog generation unit (3) extracts the partial set by including each desired catalog data (102) specified by the request, and sequentially judging whether each desired class specified by the request should be included singly in the user electronic catalog (200), whether each desired class specified by the request and all classes at lower positions on the tree structure than said each desired class should be included in the user electronic catalog (200), whether those catalog data (102) belonging to all classes at lower positions on the tree structure than each desired class specified by the request should be included in the user electronic catalog (200), and whether each desired class specified by the request and all classes at lower positions on the tree structure than said each desired class as well as those catalog data (102) belonging to all classes at lower positions on the tree structure than said each desired class should be included in the user electronic catalog (200), and
the user catalog generation unit (3) provides the user electronic catalog (200) by dividing the partial set into a plurality of distribution files (6), determining if information or data which has been divided is included in more than one of the distribution files (6) as a result of dividing the partial set, and generating complementary data (7) which either indicates a correspondence of divided information or data among the more than one of the distribution files (6) or indicates an identifier for uniquely identifying each divided information or data among the distribution files (6).

2. The supplier side device of claim 1, wherein the user catalog generation unit (3) sends the user electronic catalog (200) to a user side device of the user in response to the request.

3. The supplier side device of claim 1, further comprising:
a user electronic catalog unit (20) configured to store the user electronic catalog (200) generated by the user catalog generation unit (3), for access from the user.

4. The supplier side device of claim 1, further comprising:
a user catalog recovery unit (4) configured to recover a part or a whole of the user electronic catalog (200) from the distribution files (6) and the complementary data (7).

5. The supplier side device of claim 4, further comprising:
a recovered user electronic catalog unit (30) configured to store the part or the whole of the user electronic catalog (300) recovered by the user catalog recovery unit (4), for access from the user.

6. The supplier side device of claim 1, wherein the user catalog generation unit (3) extracts the partial set by also including any class at a position on the tree structure between each desired class specified by the request and each class already included in the user electronic catalog (200).

7. A user side device for utilizing an electronic catalog (100) provided by a supplier, the electronic catalog (100) being formed by catalog data (102) on products offered to the users by a supplier and a dictionary information (101) indicating a classification structure of the catalog data (102) in a form of a tree structure, the user side device comprising:
an electronic catalog browser unit (1) configured to enable a user of the user side device to browse through the electronic catalog (100);
a user catalog generation unit (3) configured to generate a user electronic catalog (200) by extracting a partial set of the catalog data (102) and/or the dictionary information (101) selected from the electronic catalog (100), according to a request from the user; and
a user electronic catalog unit (20) configured to store the user electronic catalog (200) generated by the user catalog generation unit (3), for browsing by the electronic catalog browser unit (1);
wherein the dictionary information (101) indicates the tree structure formed by hierarchically arranged classes for classifying the catalog data (102) and each class has attributes which are inherited to the sub-classes;
the request from the user specifies any desired class and/or catalog data (102) of the user,
the user catalog generation unit (3) extracts the partial set by including each desired catalog data (102) specified by the request, and sequentially judging whether each desired class specified by the request should be included singly in the user electronic catalog (200), whether each desired class specified by the request and all classes at lower positions on the tree structure than said each desired class should be included in the user electronic catalog (200), whether those catalog data (102) belonging to all classes at lower positions on the tree structure than each desired class specified by the request should be included in the user electronic catalog (200), and whether each desired class specified by the request and all classes at lower positions on the tree structure than said each desired class as well as those catalog data (102) belonging to all classes at lower positions on the tree structure than said each desired class should be included in the user electronic catalog (200), and
the user catalog generation unit (3) provides the user electronic catalog (200) by dividing the partial set into a plurality of distribution files (6), and determining if information or data which has been divided is included in more than one of the distribution files (6) as a result of dividing the partial set, and generating complementary data (7) which either indicates a correspondence of divided information or data among the more than one of the distribution files (6) or indicates an identifier for uniquely identifying divided information or data among the distribution files (6).

8. The user side device of claim 7, further comprising:
a user catalog recovery unit (4) configured to recover a part or a whole of the user electronic catalog (200) from the distribution files (6) and the complementary data (7).

9. The user side device of claim 8, further comprising:
a recovered user electronic catalog unit (30) configured to store the part or the whole of the user electronic catalog (300) recovered by the user catalog recovery unit (4), for browsing by the electronic catalog browser unit (1).

10. The user side device of claim 7, wherein the user catalog generation unit (3) extracts the partial set by also including any class at a position on the tree structure between each desired class specified by the request and each class already included in the user electronic catalog (200).

11. A method for providing an electronic catalog (100) for accesses from users, comprising the steps of:
storing the electronic catalog (100) for accesses from users, the electronic catalog (100) being formed by catalog data (102) on products offered to the users by a supplier and a dictionary information (101) indicating a classification structure of the catalog data (102) in a form of a tree structure; and
generating a user electronic catalog (200) by extracting a partial set of the catalog data (102) and/or the dictionary information (101) selected from the electronic catalog (100), according to a request from a user, and providing the user electronic catalog (200) for access from the user;
wherein the dictionary information (101) indicates the tree structure formed by hierarchically arranged classes for classifying the catalog data (102) and each class has attributes which are inherited to the sub-classes,
the request from the user specifies any desired class and/or catalog data (102) of the user,
the generating step extracts the partial set by including each desired catalog data (102) specified by the request, and sequentially judging whether each desired class specified by the request should be included singly in the user electronic catalog (200), whether each desired class specified by the request and all classes at lower positions on the tree structure than said each desired class should be included in the user electronic catalog (200), whether those catalog data (102) belonging to all classes at lower positions on the tree structure than each desired class specified by the request should be included in the user electronic catalog (200), and whether each desired class specified by the request and all classes at lower positions on the tree structure than said each desired class as well as those catalog data (102) belonging to all classes at lower positions on the tree structure than said each desired class should be included in the user electronic catalog (200), and
the generating step provides the user electronic catalog (200) by dividing the partial set into a plurality of distribution files (6) determining if information or data which has been divided is included in more than one of the distribution files (6) as a result of dividing the partial set and generating complementary data (7) which either indicates a correspondence of divided information or data among the more than one distribution files (6) or indicates an identifier for uniquely identifying each divided information or data among the distribution files.

12. A method for utilizing an electronic catalog (100) provided by a supplier, the electronic catalog (100) being formed by catalog data (102) on products offered to the users by a supplier and a dictionary information (101) indicating a classification structure of the catalog data (102) in a form of a tree structure, the method comprising the steps of:
generating a user electronic catalog (200) by extracting a partial set of the catalog data (102) and/or the dictionary information (101) selected from the electronic catalog (100), according to a request from the user; and
storing the user electronic catalog (200) generated by the generating step, for browsing by an electronic catalog browser (1) that enables a user to browse through the electronic catalog (100);
wherein the dictionary information (101) indicates the tree structure formed by hierarchically arranged classes for classifying the catalog data (102) and each class has attributes which are inherited to the sub-classes,
the request from the user specifies any desired class and/or catalog data (102) of the user,
the generating step extracts the partial set by including each desired catalog data (102) specified by the request, and sequentially judging whether each desired class specified by the request should be included singly in the user electronic catalog (200), whether each desired class specified by the request and all classes at lower positions on the tree structure than said each desired class should be included in the user electronic catalog (200), whether those catalog data (102) belonging to all classes at lower positions on the tree structure than each desired class specified by the request should be included in the user electronic catalog (200), and whether each desired class specified by the request and all classes at lower positions on the tree structure than said each desired class as well as those catalog data (102) belonging to all classes at lower positions on the tree structure than said each desired class should be included in the user electronic catalog (200), and
the generating step provides the user electronic catalog (200) by dividing the partial set into a plurality of distribution files (6) determining if information or data which has been divided is included in more than one of the distribution files (6) as a result of dividing the partial set and generating complementary data (7) which either indicates a correspondence of divided information or data among the more than one distribution files (6) or indicates an identifier for uniquely identifying each divided information or data among the distribution files.

13. A computer usable medium having computer readable program codes embodied therein for causing a computer to function as a supplier side device for providing an electronic catalog (100) for accesses from users, the computer readable program codes include:
a first computer readable program code for causing said computer to store the electronic catalog (100) for accesses from users, the electronic catalog (100) being formed by catalog data (102) on products offered to the users by a supplier and a dictionary information (101) indicating a classification structure of the catalog data (102) in a form of a tree structure; and
a second computer readable program code for causing said computer to generate a user electronic catalog (200) by extracting a partial set of the catalog data (102) and/or the dictionary information (101) selected from the electronic catalog (100), according to a request from a user, and providing the user electronic catalog (200) for access from the user:
wherein the dictionary information (101) indicates the tree structure formed by hierarchically arranged classes for classifying the catalog data (102) and each class has attributes which are inherited to the sub-classes,
the request from the user specifies any desired class and/or catalog data (102) of the user,
the second computer readable program code extracts the partial set by including each desired catalog data (102) specified by the request, and sequentially judging whether each desired class specified by the request should be included singly in the user electronic catalog (200), whether each desired class specified by the request and all classes at lower positions on the tree structure than said each desired class should be included in the user electronic catalog (200), whether those catalog data (102) belonging to all classes at lower positions on the tree structure than each desired class specified by the request should be included in the user electronic catalog (200), and whether each desired class specified by the request and all classes at lower positions on the tree structure than said each desired class as well as those catalog data (102) belonging to all classes at lower positions on the tree structure than said each desired class should be included in the user electronic catalog (200), and
the second computer readable program code provides the user electronic catalog (200) by dividing the partial set into a plurality of distribution files (6) determining if information or data which has been divided is included in more than one of the distribution files (6) as a result of dividing the partial set and generating complementary data (7) which either indicates a correspondence of divided information or data among the more than one distribution files (6) or indicates an identifier for uniquely identifying each divided information or data among the distribution files.

14. A computer usable medium having computer readable program codes embodied therein for causing a computer to function as a user side device for utilizing an electronic catalog (100) provided by a supplier, the electronic catalog (100) being formed by catalog data (102) on products offered to the users by a supplier and a dictionary information (101) indicating a classification structure of the catalog data (102) in a form of a tree structure, the computer readable program codes include:
a first computer readable program code for causing said computer to generate a user electronic catalog (200) by extracting a partial set of the catalog data (102) and/or the dictionary information (101) selected from the electronic catalog (100), according to a request from the user; and
a second computer readable program code for causing said computer to store the user electronic catalog (200) generated by the first computer readable program code, for browsing by an electronic catalog browser (1) that enables a user to browse through the electronic catalog (100);
wherein the dictionary information (101) indicates the tree structure formed by hierarchically arranged classes for classifying the catalog data (102) and each class has attributes which are inherited to the sub-classes,
the request from the user specifies any desired class and/or catalog data (102) of the user,
the first computer readable program code extracts the partial set by including each desired catalog data (102) specified by the request, and sequentially judging whether each desired class specified by the request should be included singly in the user electronic catalog (200), whether each desired class specified by the request and all classes at lower positions on the tree structure than said each desired class should be included in the user electronic catalog (200), whether those catalog data (102) belonging to all classes at lower positions on the tree structure than each desired class specified by the request should be included in the user electronic catalog (200), and whether each desired class specified by the request and all classes at lower positions on the tree structure than said each desired class as well as those catalog data (102) belonging to all classes at lower positions on the tree structure than said each desired class should be included in the user electronic catalog (200), and
the first computer readable program provides the user electronic catalog (200) by dividing the partial set into a plurality of distribution files (6) determining if information or data which has been divided is included in more than one of the distribution files (6) as a result of dividing the partial set and generating complementary data (7) which either indicates a correspondence of divided information or data among the more than one distribution files (6) or indicates an identifier for uniquely identifying each divided information or data among the distribution files.

## Patentansprüche

1. Zulieferervorrichtung, um einen elektronischen Katalog (100) für Zugänge durch Benutzer zur Verfügung zu stellen, welcher folgendes umfasst:
eine elektronische Katalogeinheit (10), welche konfiguriert ist, um den elektronische Katalog (100) für Zugänge durch Benutzer zu speichern, wobei der elektronische Katalog von den Katalogdaten (102) zu den für Benutzer von einem Zulieferer angebotenen Produkten gebildet wird, und von einer Verzeichnisinformation (101), welche eine Klassifikationsstruktur der Katalogdaten (102) in Form eines Baumdiagramms anzeigt; und
eine Benutzer-Katalogerzeugungseinheit (3), welche dazu ausgelegt ist, einen elektronischen Benutzerkatalog (200) durch Entnehmen einer Teilgruppe von Katalogdaten (102) und/oder der Verzeichnisinformation (101), die aus dem elektronischen Katalog (100) gemäß einer Anfrage von einem Benutzer ausgewählt wurde, zu erzeugen, und um den elektronischen Benutzerkatalog (200) für den Zugang durch den Benutzer zur Verfügung zu stellen;
wobei die Verzeichnisinformation (101) das Baumdiagramm anzeigt, welches von rangmäßig angeordneten Klassen zur Klassifizierung der Katalogdaten (102) gebildet wird, und jede Klasse Eigenschaften hat, die auf die Unterklassen übergehen;
die Anfrage des Benutzers jede gewünschte Klasse und/oder Katalogdaten (102) des Benutzers bestimmt, die Benutzer-Katalogerzeugungseinheit (3) eine Teilgruppe entnimmt, durch Einschließen aller gewünschten Katalogdaten (102), die von der Anfrage bestimmt wurden, und durch sequentielles Beurteilen, ob jede gewünschte Klasse, die von der Anfrage bestimmt wurde, einzeln in dem elektronischen Benutzerkatalog (200) eingeschlossen werden sollte, ob jede gewünschte Klasse, die von der Anfrage bestimmt wurde, und alle Klassen in niedrigeren Positionen im Baumdiagramm, als jede gewünschte Klasse, in dem elektronischen Benutzerkatalog (200) eingeschlossen werden sollten, ob diejenigen Katalogdaten (102), welche zu allen Klassen an niedrigeren Positionen in dem Baumdiagramm gehören, als jede in der Anfrage gewünschte Klasse, in dem elektronischen Benutzerkatalog (200) eingeschlossen werden sollten, und ob jede gewünschte Klasse, die in der Anfrage bestimmt wurde, und alle Klassen an niedrigern Positionen im Baumdiagramm, als die gewünschte Klasse, genauso wie die Katalogdaten (102), die zu allen Klassen an niedrigeren Positionen im Baumdiagramm gehören, als jede gewünschte Klasse, in dem elektronischen Benutzerkatalog (200) eingeschlossen werden sollten, und
die Benutzer-Katalogerzeugungseinheit (3) den elektronischen Benutzerkatalog (200) **dadurch** zur Verfügung stellt, dass sie die Teilgruppe in eine Mehrzahl von Verteilungsfiles (6) aufteilt, und bestimmt, ob Informationen, oder Daten, welche aufgeteilt wurden, in mehr als einem der Verteilungsfiles (6) enthalten sind, als Ergebnis des Aufteilens der Teilgruppe und allgemeiner Zusatzdaten (7), was entweder eine Übereinstimmung der aufgeteilten Informationen zwischen den mehreren Verteilungsfiles (6) anzeigt, oder eine Kennzeichnung anzeigt, um jede aufgeteilte Information, oder Daten in den Verteilungsfiles (6) einzigartig zu kennzeichnen.

2. Zulieferervorrichtung nach Anspruch 1, wobei die Benutzer-Katalogerzeugungseinheit (3) den elektronischen Benutzerkatalog (200) an eine benutzerseitige Vorrichtung des Benutzers als Antwort auf die Anfrage sendet.

3. Zulieferervorrichtung nach Anspruch 1, welche weiterhin folgendes umfasst:
eine elektronische Benutzerkatalogeinheit (20), welche dazu ausgelegt ist, den elektronischen Benutzerkatalog (200), der von der Benutzer-Katalogerzeugungseinheit (3) erzeugt wurde, für den Zugang durch den Benutzer zu speichern.

4. Zulieferervorrichtung nach Anspruch 1, welche weiterhin folgendes umfasst:
eine Benutzerkatalog-Wiederbeschaffungseinheit (4), welche dazu ausgelegt ist, einen Teil, oder den gesamten elektronischen Benutzerkatalog (200) von den Verteilungsfiles (6), und den zusätzlichen Daten (7) wieder zu beschaffen.

5. Zulieferervorrichtung nach Anspruch 4, welche weiterhin folgendes umfasst:
eine wieder beschaffte Einheit (30) des elektronischen Benutzerkatalogs, welche dazu ausgelegt ist, denjenigen Teil der Gesamtheit des elektronischen Benutzerkatalogs (300) zu speichern, der von der Benutzerkatalog-Wiederbeschaffungseinheit (4) zum Zugang seitens des Benutzers wieder beschafft wurde.

6. Zulieferervorrichtung nach Anspruch 1, wobei die Benutzer-Katalogerzeugungseinheit (3) die Teilgruppe entnimmt, wobei sie auch jede Klasse an einer Position in dem Baumdiagramm zwischen jeder gewünschten Klasse, die von der Anfrage bestimmt wurde und jeder Klasse, die bereits in dem elektronischen Benutzerkatalog (200) enthalten ist, einschließt.

7. Benutzervorrichtung zur Nutzung eines elektronischen Katalogs (100), der von einem Zulieferer zur Verfügung gestellt wird, wobei der elektronische Katalog (100) von den Katalogdaten (102) über Produkte, die den Benutzern von einem Zulieferer angeboten werden und einer Verzeichnisinformation (101), welche eine Klassifizierungsstruktur der Katalogdaten (102) in Form eines Baumdiagramms anzeigt, gebildet wird, wobei die Vorrichtung auf der Benutzerseite folgendes umfasst:
eine elektronische Katalogsucheinheit (1), welche dazu ausgelegt ist, um es einem Benutzer der Benutzervorrichtung zu ermöglichen, den elektronischen Katalog (100) zu durchsuchen;
eine Benutzer-Katalogerzeugungseinheit (3), welche dazu ausgelegt ist, einen elektronischen Katalog (200) zu erzeugen, **dadurch**, dass eine Teilgruppe von Katalogdaten (102) und/oder die Verzeichnisinformation (101), welche aus dem elektronischen Katalog (100) gemäß einer Anfrage eines Benutzers ausgewählt ist, entnommen wird; und
eine elektronische Benutzerkatalogeinheit (20), die dazu ausgelegt ist, einen elektronischen Benutzerkatalog (200), der von der Benutzer-Katalogerzeugungseinheit (3) erzeugt wurde um mit der elektronischen Katalogsucheinheit (1) zu suchen, zu speichern;
wobei die Verzeichnisinformation (101) die Baumstruktur, die von den rangmäßig angeordneten Klassen zur Klassifizierung der Katalogdaten (102) gebildet wird, anzeigt, und jede Klasse Eigenschaften hat, die an die Unterklassen weitergegeben werden;
die Anfrage des Benutzers jegliche gewünschte Klassen- oder Katalogdaten (102) des Benutzers bezeichnet,
die Benutzer-Katalogerzeugungseinheit (3) die Teilgruppe **dadurch** entnimmt, dass sie alle gewünschten Katalogdaten (102) einschließt, die in der Anfrage genannt wurden, und der Reihe nach beurteilt, ob jede gewünschte Klasse, die durch die Anfrage bestimmt wurde, einzeln für sich in dem elektronischen Benutzerkatalog (200) eingeschlossen werden sollte, ob jede gewünschte Klasse, die von der Anfrage bestimmt wurde, und alle Klassen in niedrigeren Positionen in dem Baumdiagramm, als die gewünschte Klasse, in dem elektronischen Benutzerkatalog (200) eingeschlossen werden sollten, ob diejenigen Katalogdaten (102) welche zu allen Klassen in niedrigeren Positionen in dem Baumdiagramm gehören, als jede gewünschte Klasse die von der Anfrage bestimmt wurde, in dem elektronischen Benutzerkatalog (200) eingeschlossen werden sollten, und ob jede gewünschte Klasse, die von der Anfrage bestimmt wurde, und alle Klassen in niedrigeren Positionen in der Baumstruktur, als die gewünschte Klasse, genauso wie diejenigen Katalogdaten (102), die zu allen Klassen in niedrigeren Positionen in dem Baumdiagramm gehören, als jede gewünschte Klasse, in dem elektronischen Benutzerkatalog (200) eingeschlossen werden sollten, und
die Benutzerkatalog-Erzeugungseinheit (3) den Benutzerkatalog (200) **dadurch** zur Verfügung stellt, dass sie die Teilgruppe in eine Mehrzahl von Verteilungsfiles (6) aufteilt, und feststellt, ob Informationen, oder Daten, die aufgeteilt wurden in mehr als einem Verteilungsfile (6) als Ergebnis des Aufteilens der Teilgruppe und des Erzeugens der zusätzlichen Daten (7), die entweder eine Übereinstimmung der geteilten Informationen oder Daten innerhalb des mehr als einen Übertragungsfiles (6) anzeigt, enthalten sind, oder eine Kennzeichnung anzeigt, um geteilte Informationen oder Daten innerhalb der Verteilungsfiles einzigartig zu kennzeichnen.

8. Benutzervorrichtung nach Anspruch 7, welche weiterhin folgendes umfasst:
eine Benutzerkatalog-Wiederbeschaffungseinheit (4), welche dazu ausgelegt ist, einen Teil, oder den gesamten elektronischen Benutzerkatalog (200) aus den Verteilungsfiles (6) und den zusätzlichen Daten (7) wieder zu beschaffen.

9. Benutzervorrichtung nach Anspruch 8, welche weiterhin folgendes umfasst:
eine wiederbeschaffte Einheit (30) des elektronischen Benutzerkatalogs, welche dazu ausgelegt ist, denjenigen Teil des gesamten elektronischen Benutzerkatalogs (300) zu speichern, der von der Benutzerkatalog-Wiederbeschaffungseinheit (4) wieder beschafft wurde, um von der elektronischen Katalog-Sucheinheit (1) durchsucht zu werden.

10. Benutzervorrichtung nach Anspruch 7, wobei die Benutzerkatalog-Erzeugungseinheit (3) die Teilgruppe so entnimmt, dass sie jede Klasse einschließt, die sich in einer Position in der Baumstruktur befindet, zwischen jeder gewünschten Klasse, die von der Anfrage bestimmt wurde, und jeder Klasse, die bereits in dem elektronischen Benutzerkatalog (200) eingeschlossen ist.

11. Verfahren, um einen elektronischen Katalog (100) für Zugänge von Benutzern zur Verfügung zu stellen, welcher die folgenden Schritte umfasst:
Speichern des elektronischen Katalogs (100) für Zugänge von Benutzern, wobei der elektronische Katalog (100) von Katalogdaten (102) über Produkte gebildet wird, die an die Benutzer von einem Zulieferer angeboten werden, und einer Verzeichnisinformation (101), die eine Klassifizierungsstruktur der Katalogdaten (102) in der Form eines Baumdiagramms anzeigt; und
Erzeugen eines elektronischen Benutzerkatalogs (200) durch Entnehmen einer Teilgruppe von Katalogdaten (102) und/oder der Verzeichnisinformation (101), die aus dem elektronischen Katalog (100) ausgewählt wurde, gemäß einer Anfrage eines Benutzers, und zur Verfügung Stellen des elektronischen Benutzerkatalogs (200) für den Zugang seitens des Benutzers;
wobei die Verzeichnisinformation (101) das Baumdiagramm anzeigt, welches von rangmäßig angeordneten Klassen zur Klassifizierung der Katalogdaten (102) gebildet wird, und wobei jede Klasse Eigenschaften hat, die an die Unterklassen weitergegeben werden,
die Anfrage des Benutzers jegliche gewünschten Klassen- und/oder Katalogdaten (102) des Benutzers festlegt,
der Erzeugungsschritt durch Einschließen aller in der Anfrage bestimmten gewünschten Katalogdaten (102) die Teilgruppe entnimmt und der Reihe nach beurteilt, ob jede gewünschte Klasse, die in der Anfrage bestimmt wurde, einzeln in dem Benutzerkatalog (200) eingeschlossen sein sollte, ob jede gewünschte Klasse, die von der Anfrage bestimmt wurde, und alle Klassen in niedrigeren Positionen in dem Baumdiagramm, als die gewünschte Klasse, in dem elektronischen Benutzerkatalog (200) eingeschlossen werden sollten, ob diejenigen Katalogdaten (102), die zu allen Klassen in niedrigeren Positionen in dem Baumdiagramm gehören, als jede gewünschte Klasse, die in der Anfrage bestimmt wurde, in dem elektronischen Benutzerkatalog (200) eingeschlossen werden sollten, und ob jede gewünschte Klasse, die in der Anfrage bestimmt wurde und alle Klassen in niedrigeren Positionen im Baumdiagramm, als jede gewünschte Klasse, genauso wie Katalogdaten (102), welche zu allen Klassen in niedrigeren Positionen des Baumdiagramms, als jede gewünschte Klasse gehören, in dem gewünschten elektronischen Benutzerkatalog (200) eingeschlossen werden sollten, und
der Erzeugungsschritt den elektronischen Benutzerkatalog (200) durch Aufteilen der Teilgruppe in eine Mehrzahl von Verteilungsfiles (6) zur Verfügung stellt, welche bestimmen, ob Informationen, oder Daten, die aufgeteilt wurden, in mehr als einem der Verteilungsfiles (6) enthalten sind, als Ergebnis der Aufteilens der Teilgruppe und des Erzeugens der zusätzlichen Daten (7), was entweder eine Übereinstimmung der aufgeteilten Informationen oder Daten unter den mehr als einem Verteilungsfiles (6) anzeigt, oder eine Kennzeichnung zur einzigartigen Kennzeichnung jeder aufgeteilten Information, oder Daten innerhalb der Verteilungsfiles anzeigt.

12. Verfahren, um einen elektronischen Katalog (100), der von einem Zulieferer zur Verfügung gestellt wird, zu nutzen, wobei der elektronische Katalog (100) von Katalogdaten (102) über Produkte, die den Benutzern von einem Zulieferer angeboten werden, und von einer Verzeichnisinformation (101), welche eine Klassifikationsstruktur der Katalogdaten (102) in Form eines Baumdiagramms anzeigt, gebildet wird, wobei das Verfahren die folgenden Schritte umfasst:
Erzeugen eines elektronischen Benutzerkataloges (200) durch Entnehmen einer Teilgruppe von Katalogdaten (102) und/oder der Verzeichnisinformationen (101), die aus dem elektronischen Katalog (100) ausgewählt wurden, gemäß einer Anfrage eines Benutzers; und
Speichern des elektronischen Benutzerkatalogs (200), der vom Erzeugungsschritt erzeugt wurde, um mit einer elektronischen Katalogsucheinrichtung (1) zu suchen, welche es dem Benutzer ermöglicht, den elektronischen Katalog (100) zu durchsuchen;
wobei die Verzeichnisinformation (101) ein Baumdiagramm anzeigt, welches von rangmäßig angeordneten Klassen zur Klassifizierung der Katalogdaten (102) gebildet wird, und wobei jede Klasse Eigenschaften hat, die an die Unterklassen weitergegeben werden, ,
die Anfrage des Benutzers jegliche gewünschte Klassen- und/oder Katalogdaten (102) des Benutzers festlegt,
der Erzeugungsschritt durch Einschließen aller in der Anfrage gewünschten Katalogdaten (102) die Teilgruppe entnimmt und der Reihe nach beurteilt, ob jede gewünschte Klasse, die in der Anfrage bestimmt wurde einzeln in dem Benutzerkatalog (200) eingeschlossen werden sollte, ob jede gewünschte Klasse, die von der Anfrage bestimmt wurde, und alle Klassen in niedrigeren Positionen in dem Baumdiagramm, als die gewünschte Klasse, in dem elektronischen Benutzerkatalog (200) eingeschlossen werden sollten, ob die Katalogdaten (102), die zu allen Klassen in niedrigeren Positionen in dem Baumdiagramm gehören, als jede gewünschte Klasse, die in der Anfrage bestimmt wurde, in dem elektronischen Benutzerkatalog (200) eingeschlossen werden sollten, und ob jede gewünschte Klasse, die in der Anfrage bestimmt wurde und alle Klassen in niedrigeren Positionen im Baumdiagramm, als jede gewünschte Klasse, genauso wie Katalogdaten (102), welche zu allen Klassen in niedrigeren Positionen des Baumdiagramms, als jede gewünschte Klasse gehören, in dem gewünschten elektronischen Benutzerkatalog (200) eingeschlossen werden sollten, und
der Erzeugungsschritt den elektronischen Benutzerkatalog (200) durch Aufteilen der Teilgruppe in eine Mehrzahl von Verteilungsfiles (6) zur Verfügung stellt, welche bestimmen, ob Informationen, oder Daten, die aufgeteilt wurden, in mehr als einem der Verteilungsfiles (6) enthalten ist, als Ergebnis der Aufteilens der Teilgruppe und des Erzeugens der zusätzlichen Daten (7), was entweder eine Übereinstimmung von aufgeteilter Information oder Daten unter den mehr als einem Verteilungsfiles (6) anzeigt, oder eine Kennzeichnung zur einzigartigen Kennzeichnung jeder aufgeteilter Informationen, oder Daten innerhalb der Verteilungsfiles anzeigt.

13. Ein durch Computer nutzbares Medium mit darin gespeicherten Computer lesbaren Programmschritten, um einen Computer zu veranlassen, als Zulieferervorrichtung zu funktionieren, um einen elektronischen Katalog (100) zum Zugang für Benutzer zur Verfügung zu stellen, wobei die Computer lesbaren Programme folgendes enthalten:
ein erstes Computer lesbares Programm, um den Computer zu veranlassen, den elektronischen Katalog (100) für Zugänge durch Benutzer zu speichern, wobei der elektronische Katalog (100) durch Katalogdaten (102) über Produkte, welche den Benutzern durch einen Zulieferer zur Verfügung gestellt werden und durch eine Verzeichnisinformation (101), welche die Klassifizierungsstruktur der Katalogdaten (102) in Form eines Baumdiagramms darstellt, gebildet wird, und
ein zweites Computer lesbares Programm, welches den Computer veranlasst, einen elektronischen Benutzerkatalog (200) durch Entnahme einer Teilgruppe von Katalogdaten (102) und/oder der Verzeichnisinformation (101), welche aus dem elektronischen Katalog (100) ausgewählt ist, gemäß einer Anfrage eines Benutzers zu erzeugen, und den elektronischen Benutzerkatalog (200) für den Zugang seitens des Benutzers zur Verfügung zu stellen,
wobei die Verzeichnisinformation (101) das Baumdiagramm anzeigt, welches von rangmäßig angeordneten Klassen zur Klassifizierung der Katalogdaten (102) gebildet wird, wobei jede Klasse Eigenschaften hat, die an die Unterklassen weitergegeben werden,
die Benutzeranfrage jegliche gewünschten Klassen und/oder Katalogdaten (102) des Benutzers bestimmt,
das zweite Computer lesbare Programm durch Einschließen aller in der Anfrage gewünschten Katalogdaten (102) die Teilgruppe entnimmt, und der Reihe nach beurteilt, ob jede gewünschte Klasse, die in der Anfrage bestimmt wurde einzeln in dem in den Benutzerkatalog (200) eingeschlossen werden sollte, ob jede gewünschte Klasse, die in der Anfrage bestimmt wurde, und alle Klassen in niedrigeren Positionen in dem Baumdiagramm, als die gewünschte Klasse, in den elektronischen Benutzerkatalog (200) eingeschlossen werden sollten, ob die Katalogdaten (102), die zu allen Klassen in niedrigeren Positionen in dem Baumdiagramm gehören, als jede gewünschte Klasse, die in der Anfrage bestimmt wurde, in den elektronischen Benutzerkatalog (200) eingeschlossen werden sollten, und ob jede gewünschte Klasse, die in der Anfrage bestimmt wurde und alle Klassen in niedrigeren Positionen im Baumdiagramm, als jede gewünschte Klasse, genauso wie diejenigen Katalogdaten (102), welche zu allen Klassen in niedrigeren Positionen des Baumdiagramms, als jede gewünschte Klasse gehören, in den elektronischen Benutzerkatalog (200) eingeschlossen werden sollten, und
das zweite Computer lesbare Programm den elektronischen Benutzerkatalog (200) durch Aufteilen der Teilgruppe in eine Mehrzahl von Verteilungsfiles (6) zur Verfügung stellt, welche bestimmen, ob Informationen, oder Daten, die aufgeteilt wurden, in mehr als einem der Verteilungsfiles (6) eingeschlossen sind, als Ergebnis der Aufteilens der Teilgruppe und des Erzeugens der zusätzlichen Daten (7), was entweder eine Übereinstimmung von aufgeteilter Information oder Daten unter den mehr als einem Verteilungsfiles (6) anzeigt, oder eine Kennzeichnung zur einzigartigen Kennzeichnung jeder aufgeteilten Information, oder Daten innerhalb der Verteilungsfiles anzeigt.

14. Ein durch Computer nutzbares Medium mit darin gespeicherten Computer lesbaren Programmschritten, um einen Computer zu veranlassen, als Benutzervorrichtung zu funktionieren, um einen elektronischen Katalog (100) zu nutzen, der von einem Zulieferer zur Verfügung gestellt wird, wobei der elektronische Katalog (100) von Katalogdaten (102) über Produkte, die von dem Zulieferer Benutzern angeboten werden, und von einer Verzeichnisinformation (101) die eine Klassifikationsstruktur der Katalogdaten (102) in Form eines Baumdiagramms anzeigt, gebildet wird, wobei die Computer lesbaren Programme folgendes enthalten:
ein erstes Computer lesbares Programm, um den Computer zu veranlassen, den elektronischen Benutzerkatalog (200) durch Entnehmen einer Teilgruppe von Katalogdaten (102) und/oder der Verzeichnisinformation (101), welche aus dem elektronischen Katalog (100) gemäß einer Benutzeranfrage entnommen wurde, zu erzeugen; und
ein zweites Computer lesbares Programm, welches den Computer veranlasst, einen elektronischen Benutzerkatalog (200) zu speichern, welcher von dem ersten Computer lesbaren Programm zum Durchsuchen mit einer elektronischen Katalog Sucheinrichtung (1), die es dem Benutzer ermöglicht, den elektronischen Katalog (100) zu durchsuchen, erzeugt wurde;
wobei die Verzeichnisinformation (101) das Baumdiagramm anzeigt, welches von rangmäßig angeordneten Klassen zur Klassifizierung der Katalogdaten (102) gebildet wird, wobei jede Klasse Eigenschaften hat, die an die Unterklassen weitergegeben werden,
die Benutzeranfrage jegliche gewünschten Klassen und/öder Katalogdaten (102) des Benutzers bestimmt,
das erste Computer lesbare Programm durch Einschließen aller in der Anfrage gewünschten Katalogdaten (102) die Teilgruppe entnimmt und der Reihe nach beurteilt, ob jede gewünschte Klasse, die in der Anfrage bestimmt wurde, einzeln in dem elektronischen Benutzerkatalog (200) eingeschlossen werden sollte, ob jede gewünschte Klasse, die von der Anfrage bestimmt wurde, und alle Klassen in niedrigeren Positionen in dem Baumdiagramm, als die gewünschte Klasse, in dem elektronischen Benutzerkatalog (200) eingeschlossen werden sollten, ob die Katalogdaten (102), die zu allen Klassen in niedrigeren Positionen in dem Baumdiagramm gehören, als jede gewünschte Klasse, die in der Anfrage bestimmt wurde, in den elektronischen Benutzerkatalog (200) eingeschlossen werden sollten, und ob jede gewünschte Klasse, die in der Anfrage bestimmt wurde und alle Klassen in niedrigeren Positionen im Baumdiagramm, als jede gewünschte Klasse, genauso wie Katalogdaten (102), welche zu allen Klassen in niedrigeren Positionen des Baumdiagramms, als jede gewünschte Klasse gehören, in den gewünschten elektronischen Benutzerkatalog (200) eingeschlossen werden sollten, und
das erste Computer lesbare Programm den elektronischen Benutzerkatalog (200) durch Aufteilen der Teilgruppe in eine Mehrzahl von Verteilungsfiles (6) zur Verfügung stellt, welche bestimmen, ob Informationen, oder Daten, die aufgeteilt wurden, in mehr als einem der Verteilungsfiles (6) eingeschlossen sind, als Ergebnis des Aufteilens der Teilgruppe und des Erzeugens der zusätzlichen Daten (7), was entweder eine Übereinstimmung von aufgeteilter Information oder Daten unter den mehr als einem Verteilungsfiles (6) anzeigt, oder eine Kennzeichnung zur einzigartigen Kennzeichnung jeder aufgeteilten Information, oder Daten innerhalb der Verteilungsfiles anzeigt.

## Revendications

1. Dispositif du côté fournisseur destiné à fournir un catalogue électronique (100) en vue d'accès par des utilisateurs, comprenant :
une unité de catalogue électronique (10) configurée pour mémoriser le catalogue électronique (100) en vue d'accès par des utilisateurs, le catalogue électronique (100) étant formé par des données de catalogue (102) sur des produits offerts aux utilisateurs par un fournisseur, ainsi que par une information de dictionnaire (101) indiquant une structure de classification des données de catalogue (102) sous la forme d'une structure arborescente, et
une unité de génération de catalogue d'utilisateur (3) configurée pour générer un catalogue électronique d'utilisateur (200) en extrayant un jeu partiel des données de catalogue (102) et/ou l'information de dictionnaire (101) sélectionnés à partir du catalogue électronique (100), en fonction d'une demande provenant d'un utilisateur et pour fournir à l'utilisateur un catalogue électronique (200) en vue d'un accès par l'utilisateur,
dans lequel l'information de dictionnaire (101) indique la structure arborescente formée par des classes agencées hiérarchiquement pour classer les données de catalogue (102) et où chaque classe possède des attributs qui sont donnés en héritage à des sous-classes,
la demande provenant de l'utilisateur spécifie une quelconque classe souhaitée et/ou les données de catalogue (102) de l'utilisateur,
l'unité de génération de catalogue d'utilisateur (3) extrait le jeu partiel en incluant chaque donnée de catalogue souhaitée (102) spécifiée par la demande est en évaluant séquentiellement si chaque classe souhaitée, spécifiée par la catalogue électronique d'utilisateur (200), si chaque classe souhaitée, spécifiée par la demande et toutes les classes à des positions inférieures sur la structure arborescente par rapport à ladite chaque classe souhaitée devraient être incluses dans le catalogue électronique d'utilisateur (200), si ces données de catalogue (102) appartenant à la totalité des classes à des positions inférieures sur la structure arborescente par rapport à chaque classe souhaitée, spécifiée par la demande, devraient être incluses dans le catalogue électronique d'utilisateur (200), et si chaque classe souhaitée, spécifiée par la demande et toutes les classes à des positions inférieures sur la structure arborescente par rapport à ladite chaque classe souhaitée de même que ces données de catalogue (102) appartenant à toutes les classes à des positions inférieures sur la structure arborescente par rapport à ladite chaque classe souhaitée devraient être incluses dans le catalogue électronique d'utilisateur (200), et
l'unité de génération de catalogue d'utilisateur (3) fournit à l'utilisateur un catalogue électronique (200) en divisant le jeu partiel en une pluralité de fichiers de répartition (6) en déterminant si une information ou une donnée qui ont été divisées sont incluses dans plus d'un seul des fichiers de répartition (6) en résultat de la division du jeu partiel et de la génération de données complémentaires (7) qui indiquent l'une ou l'autre une correspondance de l'information ou de la donnée divisée parmi les plus de un fichiers de répartition (6), ou bien indiquent un identificateur destiné à identifier de manière unique chaque information ou donnée divisée parmi les fichiers de répartition (6).

2. Dispositif du côté fournisseur selon la revendication 1, dans lequel l'unité de génération de catalogue d'utilisateur (3) envoie le catalogue électronique d'utilisateur (200) à un dispositif du côté utilisateur de l'utilisateur en réponse à la demande.

3. Dispositif du côté fournisseur selon la revendication 1, comprenant en outre :
une unité de catalogue électronique d'utilisateur (20) configurée pour mémoriser le catalogue électronique utilisateur (200) généré par l'unité de génération de catalogue d'utilisateur (3) en vue d'un accès par l'utilisateur.

4. Dispositif du côté fournisseur selon la revendication 1, comprenant en outre :
une unité de récupération de catalogue d'utilisateur (4) configurée pour récupérer une partie ou la totalité du catalogue électronique d'utilisateur (200) à partir des fichiers de répartition (6) et des données complémentaires (7).

5. Dispositif du côté fournisseur selon la revendication 4, comprenant en outre :
une unité de catalogue électronique d'utilisateur récupéré (30) configurée pour mémoriser une partie ou la totalité du catalogue électronique d'utilisateur (300) récupérée par l'unité de récupération de catalogue d'utilisateur (4) en vue d'un accès par l'utilisateur.

6. Dispositif du côté fournisseur selon la revendication 1, dans lequel l'unité de génération de catalogue d'utilisateur (3) extrait le jeu partiel en incluant également une classe quelconque à une position sur la structure arborescente entre chaque classe souhaitée, spécifiée par la demande, et chaque classe déjà incluse dans le catalogue électronique d'utilisateur (200).

7. Dispositif du côté utilisateur destiné à utiliser un catalogue électronique (100) procuré par un fournisseur, le catalogue électronique (100) étant formé par des données de catalogue (102) sur des produits offerts aux utilisateurs par un fournisseur ainsi qu'une information de dictionnaire (101) indiquant une structure de classification des données de catalogue (102) sous forme d'une structure arborescente, le dispositif du côté utilisateur comprenant :
une unité de navigateur de catalogue électronique (1) configurée pour permettre à un utilisateur du dispositif du côté utilisateur de naviguer dans le catalogue électronique (100),
une unité de génération de catalogue d'utilisateur (3) configurée pour générer un catalogue électronique d'utilisateur (200) en extrayant un jeu partiel des données de catalogue (102) et/ou l'information de dictionnaire (101) sélectionnés à partir du catalogue électronique (100) en fonction d'une demande provenant de l'utilisateur, et
une unité de catalogue électronique d'utilisateur (20) configurée pour mémoriser le catalogue électronique d'utilisateur (200) généré par l'unité de génération de catalogue d'utilisateur (3) afin d'effectuer une navigation grâce à l'unité de navigateur de catalogue électronique (1),
dans lequel l'information de dictionnaire (101) indique la structure arborescente formée par des classes agencées hiérarchiquement afin de classer les données de catalogue (102) et où chaque classe possède des attributs qui sont donnés en héritage à des sous-classes,
la demande provenant de l'utilisateur spécifie une quelconque classe souhaitée et/ou des données de catalogue (102) de l'utilisateur,
l'unité de génération de catalogue (3) extrait le jeu partiel en incluant chaque donnée de catalogue souhaitée (102) spécifiée par la demande et en évaluant séquentiellement si chaque classe souhaitée, spécifiée par la demande, devrait être incluse individuellement dans le catalogue électronique d'utilisateur (200), si chaque classe souhaitée, spécifiée par la demande et toutes les classes à des positions inférieures sur la structure arborescente par rapport à ladite chaque classe souhaitée devraient être incluses dans le catalogue électronique d'utilisateur (200), si ces données de catalogue (102) appartenant à la totalité des classes à des positions inférieures sur la structure arborescente par rapport à chaque classe souhaitée, spécifiée par la demande, devraient être incluses dans le catalogue électronique d'utilisateur (200), et si chaque classe souhaitée, spécifiée par la demande et toutes les classes à des positions inférieures sur la structure arborescente par rapport à ladite chaque classe souhaitée de même que ces données de catalogue (102) appartenant à toutes les classes à des positions inférieures sur la structure arborescente par rapport à ladite chaque classe souhaitée devraient être incluses dans le catalogue électronique d'utilisateur (200), et
l'unité de génération de catalogue d'utilisateur (3) fournit le catalogue électronique d'utilisateur (200) en divisant le jeu partiel en une pluralité de fichiers de répartition (6) et en déterminant si l'information ou la donnée qui a été divisée est incluse dans plus d'un des fichiers de répartition (6) en résultat de la division du jeu partiel et de la génération de données complémentaires (7) qui indiquent l'une ou l'autre une correspondance de l'information ou de la donnée divisée parmi les plus de un fichiers de répartition (6), ou bien indiquent un identificateur destiné à identifier de manière unique chaque information ou donnée divisée parmi les fichiers de répartition (6).

8. Dispositif de côté utilisateur selon la revendication 7, comprenant en outre :
une unité de récupération de catalogue d'utilisateur (4) configurée pour récupérer une partie ou la totalité du catalogue électronique d'utilisateur (200) à partir des fichiers de répartition (6) et des données complémentaires (7).

9. Dispositif du côté utilisateur selon la revendication 8, comprenant en outre :
une unité de catalogue électronique d'utilisateur récupéré (30) configurée pour mémoriser une partie ou la totalité du catalogue électronique d'utilisateur (300) récupérée par l'unité de récupération de catalogue d'utilisateur (4) afin d'effectuer une navigation grâce à l'unité de navigateur de catalogue électronique (1).

10. Dispositif du côté utilisateur selon la revendication 7, dans lequel l'unité de génération de catalogue d'utilisateur (3) extrait le jeu partiel en incluant également une classe quelconque à une position sur la structure arborescente entre chaque classe souhaitée, spécifiée par la demande, et chaque classe déjà incluse dans le catalogue électronique d'utilisateur (200).

11. Procédé de fourniture d'un catalogue électronique (100) destiné à des accès de la part d'utilisateurs comprenant les étapes consistant à :
mémoriser le catalogue électronique (100) en vue d'accès par des utilisateurs, le catalogue électronique (100) étant formé de données de catalogue (102) sur des produits offerts aux utilisateurs par un fournisseur et par une information de dictionnaire (101) indiquant une structure de classification des données de catalogue (102) sous la forme d'une structure arborescente, et
générer un catalogue électronique d'utilisateur (200) en extrayant un jeu partiel des données de catalogue (102) et/ou l'information de dictionnaire (101) sélectionnés à partir du catalogue électronique (100) en fonction de la demande provenant d'un utilisateur et fournir le catalogue électronique d'utilisateur (200) en vue d'un accès par l'utilisateur,
dans lequel l'information de dictionnaire (101) indique la structure arborescente formée par des classes hiérarchiquement agencées en vue de classer les données de catalogue (102) et chaque classe possède des attributs qui sont donnés en héritage à des sous-classes,
la demande provenant de l'utilisateur spécifie une quelconque classe souhaitée et/ou des données de catalogue (102) de l'utilisateur,
l'étape de génération extrait le jeu partiel en incluant chaque donnée de catalogue souhaitée (102) spécifiée par la demande et en évaluant séquentiellement si chaque classe souhaitée, spécifiée par la demande, devrait être incluse individuellement dans le catalogue électronique d'utilisateur (200), si chaque classe souhaitée, spécifiée par la demande et toutes les classes à des positions inférieures sur la structure arborescente par rapport à ladite chaque classe souhaitée devraient être incluses dans le catalogue électronique d'utilisateur (200), si ces données de catalogue (102) appartenant à la totalité des classes à des positions inférieures sur la structure arborescente par rapport à chaque classe souhaitée, spécifiée par la demande, devraient être incluses dans le catalogue électronique d'utilisateur (200), et si chaque classe souhaitée, spécifiée par la demande et toutes les classes à des positions inférieures sur la structure arborescente par rapport à ladite chaque classe souhaitée de même que ces données de catalogue (102) appartenant à toutes les classes à des positions inférieures sur la structure arborescente par rapport à ladite chaque classe souhaitée devraient être incluses dans le catalogue électronique d'utilisateur (200), et
l'étape de génération fournit à l'utilisateur un catalogue électronique (200) en divisant le jeu partiel en une pluralité de fichiers de répartition (6) déterminant si une information ou une donnée qui ont été divisées sont incluses dans plus d'un seul des fichiers de répartition (6) en résultat de la division du jeu partiel et de la génération de données complémentaires (7) qui indiquent l'une ou l'autre une correspondance de l'information ou de la donnée divisée parmi les plus de un fichiers de répartition (6), ou bien indiquent un identificateur destiné à identifier de manière unique chaque information ou donnée divisée parmi les fichiers de répartition.

12. Procédé d'utilisation d'un catalogue électronique (100) procuré par un fournisseur, le catalogue électronique (100) étant formé de données de catalogue (102) sur des produits offerts aux utilisateurs par un fournisseur, ainsi qu'une information de dictionnaire (101) indiquant une structure de classification des données de catalogue (102) sous la forme d'une structure arborescente, le procédé comprenant les étapes consistant à :
générer un catalogue électronique d'utilisateur (200) en extrayant un jeu partiel des données de catalogue (102) et/ou l'information de dictionnaire (101) sélectionnés à partir du catalogue électronique (100) en fonction d'une demande provenant de l'utilisateur, et
mémoriser le catalogue électronique d'utilisateur (200) généré par l'étape de génération en vue d'une navigation grasse à un navigateur de catalogue électronique (1) qui permet à un utilisateur de naviguer dans le catalogue électronique (100),
dans lequel l'information de dictionnaire (101) indique la structure arborescente formée par des classes agencées hiérarchiquement pour classer les données de catalogue (102) et chaque classe possède des attributs qui sont donnés en héritage à des sous-classes,
la demande provenant de l'utilisateur spécifie une quelconque classe souhaitée et/ou les données de catalogue (102) de l'utilisateur,
l'étape de génération extrait le jeu partiel en incluant chaque donnée de catalogue souhaitée (102), spécifiée par la demande, et en évaluant séquentiellement si chaque classe souhaitée, spécifiée par la demande, devrait être incluse individuellement dans le catalogue électronique d'utilisateur (200), si chaque classe souhaitée, spécifiée par la demande et toutes les classes à des positions inférieures sur la structure arborescente par rapport à ladite chaque classe souhaitée devraient être incluses dans le catalogue électronique d'utilisateur (200), si ces données de catalogue (102) appartenant à la totalité des classes à des positions inférieures sur la structure arborescente par rapport à chaque classe souhaitée, spécifiée par la demande, devraient être incluses dans le catalogue électronique d'utilisateur (200), et si chaque classe souhaitée, spécifiée par la demande et toutes les classes à des positions inférieures sur la structure arborescente par rapport à ladite chaque classe souhaitée de même que ces données de catalogue (102) appartenant à toutes les classes à des positions inférieures sur la structure arborescente par rapport à ladite chaque classe souhaitée devraient être incluses dans le catalogue électronique d'utilisateur (200), et
l'étape de génération fournit à l'utilisateur un catalogue électronique (200) en divisant le jeu partiel en une pluralité de fichiers de répartition (6) déterminant si une information ou une donnée qui ont été divisées sont incluses dans plus d'un seul des fichiers de répartition (6) en résultat de la division du jeu partiel et de la génération de données complémentaires (7) qui indiquent l'une ou l'autre une correspondance de l'information ou de la donnée divisée parmi les plus de un fichiers de répartition (6), ou bien indiquent un identificateur destiné à identifier de manière unique chaque information ou donnée divisée parmi les fichiers de répartition.

13. Support utilisable par un ordinateur comportant des codes de programmes pouvant être lus par ordinateur intégrés dans celui-ci afin d'amener l'ordinateur à fonctionner en tant que dispositif du côté fournisseur destiné à fournir un catalogue électronique (100) en vue d'accès par des utilisateurs, les codes de programmes pouvant être lus par ordinateur incluent :
un premier code de programme pouvant être lu par ordinateur destiné à amener ledit ordinateur à mémoriser le catalogue électronique (100) en vue d'accès par des utilisateurs, le catalogue électronique (100) étant formé de données de catalogue (102) sur des produits offerts aux utilisateurs par un fournisseur, ainsi qu'une information de dictionnaire (101) indiquant une structure de classification des données de catalogue (102) sous la forme d'une structure arborescente, et
un second code de programme pouvant être lu par ordinateur destiné à amener ledit ordinateur à générer un catalogue électronique d'utilisateur (200) en extrayant un jeu partiel des données de catalogue (102) et/ou l'information de dictionnaire (101) sélectionnés à partir du catalogue électronique (100) en fonction d'une demande provenant d'un utilisateur, et en fournissant le catalogue électronique d'utilisateur (200) pour un accès par l'utilisateur :
dans lequel l'information de dictionnaire (101) indique la structure arborescente formée par des classes agencées hiérarchiquement afin de classer les données de catalogue (102) et chaque classe possède des attributs qui sont donnés en héritage aux sous-classes,
la demande provenant de l'utilisateur spécifie une quelconque classe souhaitée et/ou le catalogue de données (102) de l'utilisateur,
le second code de programme pouvant être lu par ordinateur extrait le jeu partiel en incluant chaque donnée de catalogue souhaitée (102) spécifiée par la demande, et en évaluant séquentiellement si chaque classe souhaitée, spécifiée par la demande, devrait être incluse individuellement dans le catalogue électronique d'utilisateur (200), si chaque classe souhaitée, spécifiée par la demande et toutes les classes à des positions inférieures sur la structure arborescente par rapport à ladite chaque classe souhaitée devraient être incluses dans le catalogue électronique d'utilisateur (200), si ces données de catalogue (102) appartenant à la totalité des classes à des positions inférieures sur la structure arborescente par rapport à chaque classe souhaitée, spécifiée par la demande, devraient être incluses dans le catalogue électronique d'utilisateur (200), et si chaque classe souhaitée, spécifiée par la demande et toutes les classes à des positions inférieures sur la structure arborescente par rapport à ladite chaque classe souhaitée de même que ces données de catalogue (102) appartenant à toutes les classes à des positions inférieures sur la structure arborescente par rapport à ladite chaque classe souhaitée devraient être incluses dans le catalogue électronique d'utilisateur (200), et
le second code de programme pouvant être lu par ordinateur fournit à l'utilisateur un catalogue électronique (200) en divisant le jeu partiel en une pluralité de fichiers de répartition (6) déterminant si une information ou une donnée qui ont été divisées sont incluses dans plus d'un seul des fichiers de répartition (6) en résultat de la division du jeu partiel et de la génération de données complémentaires (7) qui indiquent l'une ou l'autre une correspondance de l'information ou de la donnée divisée parmi les plus de un fichiers de répartition (6), ou bien indiquent un identificateur destiné à identifier de manière unique chaque information ou donnée divisée parmi les fichiers de répartition.

14. Support utilisable par un ordinateur comportant des codes de programmes pouvant être lus par ordinateur intégrés dans celui-ci afin d'amener l'ordinateur à fonctionner en tant que dispositif du côté utilisateur afin d'utiliser un catalogue électronique (100) procuré par un fournisseur, le catalogue électronique (100) étant formé par des données de catalogue (102) sur des produits offerts aux utilisateurs par un fournisseur, ainsi qu'une information de dictionnaire (101) indiquant une structure de classification des données de catalogue (102) sous la forme d'une structure arborescente, les codes de programmes pouvant être lus par ordinateur incluent :
un premier code de programme pouvant être lu par ordinateur destiné à amener ledit ordinateur à générer un catalogue électronique d'utilisateur (200) en extrayant un jeu partiel des données de catalogue (102) et/ou l'information de dictionnaire (101) sélectionnés à partir du catalogue électronique (100) en fonction d'une demande provenant de l'utilisateur, et
un second code de programme pouvant être lu par ordinateur destiné à amener ledit ordinateur à mémoriser le catalogue électronique d'utilisateur (200) généré par le premier code de programme pouvant être lu par ordinateur afin d'effectuer une navigation grâce à un navigateur de catalogue électronique (1) qui permet à un utilisateur de naviguer dans le catalogue électronique (100),
dans lequel l'information de dictionnaire (101) indique la structure arborescente formée par des classes agencées hiérarchiquement afin de classer les données de catalogue (102) et chaque classe possède des attributs qui sont donnés en héritage aux sous-classes,
la demande provenant de l'utilisateur spécifie une quelconque classe souhaitée et/ou le catalogue de données (102) de l'utilisateur,
le premier code de programme pouvant être lu par ordinateur extrait le jeu partiel en incluant chaque donnée de catalogue souhaitée (102) spécifiée par la demande, et en évaluant séquentiellement si chaque classe souhaitée, spécifiée par la demande, devrait être incluse individuellement dans le catalogue électronique d'utilisateur (200), si chaque classe souhaitée, spécifiée par la demande et toutes les classes à des positions inférieures sur la structure arborescente par rapport à ladite chaque classe souhaitée devraient être incluses dans le catalogue électronique d'utilisateur (200), si ces données de catalogue (102) appartenant à la totalité des classes à des positions inférieures sur la structure arborescente par rapport à chaque classe souhaitée, spécifiée par la demande, devraient être incluses dans le catalogue électronique d'utilisateur (200), et si chaque classe souhaitée, spécifiée par la demande et toutes les classes à des positions inférieures sur la structure arborescente par rapport à ladite chaque classe souhaitée de même que ces données de catalogue (102) appartenant à toutes les classes à des positions inférieures sur la structure arborescente par rapport à ladite chaque classe souhaitée devraient être incluses dans le catalogue électronique d'utilisateur (200), et
le premier code de programme pouvant être lu par ordinateur fournit à l'utilisateur un catalogue électronique (200) en divisant le jeu partiel en une pluralité de fichiers de répartition (6) déterminant si une information ou une donnée qui ont été divisées sont incluses dans plus d'un seul des fichiers de répartition (6) en résultat de la division du jeu partiel et de la génération de données complémentaires (7) qui indiquent l'une ou l'autre une correspondance de l'information ou de la donnée divisée parmi les plus de un fichiers de répartition (6), ou bien indiquent un identificateur destiné à identifier de manière unique chaque information ou donnée divisée parmi les fichiers de répartition.
